(19)

Europäisches
Patentamt
European
Patent Office
Office européen
des brevets

(11) **EP 1 927 384 A1**

(12) **EUROPEAN PATENT APPLICATION**

(43) Date of publication:
**04.06.2008 Bulletin 2008/23**

(51) Int Cl.:
***A63F 13/02*** *(2006.01)*

(21) Application number: **07121924.0**

(22) Date of filing: **29.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **01.12.2006 JP 2006326372**

(71) Applicant: **NAMCO BANDAI Games Inc.**
**Shinagawa-ku**
**Tokyo**
**140-8590 (JP)**

(72) Inventor: **Yamaguchi, Kentaro**
**Tokyo 140-8590 (JP)**

(74) Representative: **Newstead, Michael John et al**
**Page Hargrave**
**Southgate**
**Whitefriars**
**Lewins Mead**
**Bristol BS1 2NT (GB)**

(54) **Method of determining operation input using game controller including acceleration detector, and method of calculating moving path of the game controller**

(57)     A game controller including an acceleration sensor capable of detecting accelerations along three axial directions is moved to draw a figure pattern in a space. The positions $p_i$ of the moving path are derived from the acceleration sampled during the movement, and a path function and an approximate plane are calculated from the positions $p_i$. An image obtained by observing the approximate plane in the normal direction is generated as a path image. The path image data is pattern-matched with reference pattern data to select a reference pattern with the highest degree of conformity, and the operation of a player character is controlled based on a magic actuation operation input instruction associated with the selected reference pattern.

FIG. 1

EP 1 927 384 A1

**Description**

BACKGROUND OF THE INVENTION

The present invention relates to a program which causes a computer to execute a specific game and the like.

Consumer game devices generally include a game controller (also referred to as "game pad") having elements such as a push button switch and an analog lever. In a well-known style, a player holds a game controller with both hands in front of a video display, and plays a game by inputting various game operations with the fingers.

As a method which enables an operation input without directly operating a push button switch, an analog lever, and the like, a method is known in which the movement of a finger is photographed so that an operation input can be performed based on the moving path of the finger (JP-A-2004-94653, for example). Specifically, JP-A-2004-94653 discloses a method utilizing a system provided with a camera device which can measure the distance between the camera device and a target object and a display which allows the user to visually observe the input result, wherein the finger tip region of the user is estimated from an image photographed using the camera device, and the distance between the finger tip and an information input plane is then estimated. The system determines that the user is inputting an operation when it is estimated that the finger tip comes in contact with the information input plane, and determines that the user is not inputting an operation when it is estimated that the finger tip does not come in contact with the information input plane, thereby enabling the user to input arbitrary path information by a natural and easy operation.

In many video games (particularly a role-playing game (RPG)), it is an important factor to allow a player to be sufficiently involved with a player character. When employing an operation input using a push button switch or an analog lever, since the actual input operation (e.g., pressing the switch or operating the lever) differs from the operation of the player character in the game caused by the input operation, the player cannot be sufficiently involved with the player character.

The technology disclosed in JP-A-2004-94653 may be used to deal with such a demand. The path information of a target object such as a finger tip can be input using the technology disclosed in JP-A-2004-94653. Specifically, the movement of an object can be used to input a game operation. However, since the technology disclosed in JP-A-2004-94653 requires a large system, it is difficult to apply this technology to consumer game devices for which a reduction in cost is demanded.

On the other hand, along with a recent reduction in cost and size of acceleration sensors, a game controller including an acceleration sensor has been developed and put to practical use. In this case, the acceleration sensor detects acceleration along with the movement of the game controller, and a detection signal is output to the main body of the consumer game device and can be used for a game.

SUMMARY

According to one aspect of the invention, there is provided a method that causes a computer to determine an operation input using a game controller including an acceleration detector, the method comprising:

calculating a moving path of the game controller based on acceleration information detected by the acceleration detector when a player moves the game controller to change a position of the game controller in a real space; and determining the operation input based on the calculated moving path.

BRIEF DESCRIPTION OF THE SEVERAL VIEWS OF THE DRAWING

FIG. 1 is a system configuration diagram showing a configuration example of a consumer game device.
FIG. 2 is a schematic view showing a game play style.
FIGS. 3A to 3C are views showing examples of a magic figure pattern which causes a player character to practice magic.
FIG. 4 is a schematic view illustrative of the principle of a magic actuation operation input.
FIG. 5 is a schematic view illustrative of the principle of a magic actuation operation input, wherein positions $p_i$ on a moving path are calculated in time series.
FIG. 6 is a schematic view illustrative of the principle of a magic actuation operation input, wherein a process of handling a moving path as a two-dimensional figure is shown.
FIG. 7 is a functional block diagram showing an example of a functional configuration.
FIG. 8 is a data configuration diagram showing an example of the data configuration of reference pattern data.
FIG. 9 is a data configuration diagram showing a data configuration example of damage TBL data.

FIG. 10 is a data configuration diagram showing a data configuration example of sampling data.

FIG. 11 is a flowchart illustrative of the flow of a process.

FIG. 12 is a flowchart illustrative of the flow of a moving path calculation process.

FIG. 13 is a flowchart illustrative of the flow of an operation input instruction determination process.

FIGS. 14A and 14B are schematic views showing a game play state example.

FIGS. 15A and 15B are views showing variations of a magic actuation operation input.

FIG. 16 is a view illustrative of a hardware configuration which implements a consumer game device.

FIGS. 17A to 17C are views showing modifications of a figure pattern which causes a player character to practice magic.

FIGS. 18A and 18B are schematic views when using a modification of a variable parameter.

FIGS. 19A and 19B are schematic views when using another modification of a variable parameter.

DETAILED DESCRIPTION OF THE EMBODIMENT

The invention may enable an operation input to be performed by moving a game controller including an acceleration sensor.

According to one embodiment of the invention, there is provided a method that causes a computer to determine an operation input using a game controller including an acceleration detector, the method comprising:

calculating a moving path of the game controller based on acceleration information detected by the acceleration detector when a player moves the game controller to change a position of the game controller in a real space; and determining the operation input based on the calculated moving path.

According to another embodiment of the invention, there is provided a game device comprising:

a game controller including an acceleration detector;
a moving path calculation section that calculates a moving path of the game controller based on acceleration information detected by the acceleration detector when a player moves the game controller to change a position of the game controller in a real space; and
a determination section that determines an operation input based on the calculated moving path.

According to the above configuration, when the game controller including the acceleration detector is moved to change the present position of the game controller, the moving path of the game controller is calculated based on the acceleration information detected by the acceleration detector.

The method may further include controlling a game process based on the determined operation input.

According to the above configuration, the process of the game can be controlled based on the calculated moving path. Specifically, the operation of moving the game controller can be acquired as the moving path, and the game can be caused to proceed based on the moving path.

The method may further include:

determining an operation input instruction from a plurality of operation input instructions based on the calculated moving path; and
controlling a game process based on the determined operation input instruction.

According to the above configuration, the game operation can be input by drawing the moving path. For example, in a game in which a wizard (player character) draws a seal (formed of a single figure or a combination of a plurality of figures or characters) by waving a magic wand to practice magic, the path of the magic wand corresponds to the moving path. Therefore, when the magic actuation operation input instruction is determined based on the moving path, the wizard character can be caused to practice magic based on the moving path using the game controller.

In the method, the determining of the operation input instruction may include:

selecting path reference data conforming to the calculated moving path from a plurality of pieces of path reference data respectively associated with the plurality of operation input instructions; and determining that the operation input instruction associated with the selected path reference data has been issued.

The path reference data refers to data which defines a path as a reference. For example, the path reference data refers to data from which a path can be derived (e.g., function indicating the path, image obtained by photographing the path in one direction, or vector data of the entirety or part of the path) or data such as a representative value indicating the characteristics of the path.

According to the above configuration, the path reference data is respectively associated with each of the operation input instructions, and the operation input instruction can be selected from the operation input instructions by selecting the path reference data corresponding to the calculated moving path. This enables the moving path to be selected from a number of moving paths, whereby the variations of the operation input which can be performed by inputting the moving path can be increased.

In the method,

each of the plurality of operation input instructions may be an instruction that directs a predetermined process based on a given variable parameter;

the determining the operation input instruction may include calculating a degree of conformity between the calculated moving path and each of the plurality of pieces of path reference data, and selecting path reference data from the plurality of pieces of path reference data based on the calculation result; and

the controlling the game process may include executing the process based on the determined operation input instruction while changing the variable parameter depending on the calculated degree of conformity of the selected path reference data.

The term "degree of conformity" used herein refers to the degree of similarity (degree of approximation or degree of probability) between a sample and the reference data.

According to the above configuration, the variable parameter is changed depending on the degree of conformity between the moving path and the path reference data, and the operation input instruction corresponding to the path reference data is executed depending on the variable parameter which has been changed. Therefore, the player's skill of drawing a moving path by moving the game controller can be reflected in the game. For example, when the movement of the game controller is considered to be the operation of a magic wand possessed by a wizard character and a magic actuation operation input is performed by utilizing the moving path, the degree of magic is determined by the movement of the magic wand, whereby the player is further involved in the wizard character.

The method may further include executing a process based on a predetermined operation input instruction among the plurality of operation input instructions when the calculated moving path coincides with a predetermined path.

According to the above configuration, the operation input can be performed by utilizing the moving path. For example, when a wizard (player character) draws a seal by waving a magic wand to practice magic, the path of the magic wand corresponds to the moving path. Therefore, when the magic actuation operation input instruction is determined based on the moving path, the wizard character can be caused to practice magic based on the moving path using the game controller.

In the method,

each of the plurality of operation input instructions may be an instruction that directs a predetermined process based on a given variable parameter;

the method may further include calculating a size of the entire calculated moving path; and

the controlling the game process may include executing the process based on the determined operation input instruction while changing the variable parameter depending on the calculated size of the entire moving path.

According to the above configuration, the process performed based on the operation input instruction associated with the moving path can be changed by changing the size of the moving path. Therefore, the variations of the operation input which can be performed by inputting the moving path can be increased, whereby game operability can be increased.

In the method, each of the plurality of operation input instructions may be an instruction that directs a predetermined process based on a given variable parameter;

the moving path may be calculated by calculating a moving path in a three-dimensional coordinate system based on a direction of the game controller;

the method may further include determining a direction of the entire moving path from the calculated moving path in the three-dimensional coordinate system; and

the controlling the game process may include executing the process based on the determined operation input instruction while changing the variable parameter depending on the determined direction of the entire moving path.

In the method, the moving path may be calculated by calculating a moving path in a three-dimensional coordinate system based on a direction of the game controller;

the method may further include determining a direction of the entire moving path from the calculated moving path in the three-dimensional coordinate system; and

the determining the operation input instruction may include determining the operation input instruction based on the calculated moving path and the determined direction of the entire moving path.

The term "direction of the entire moving path" used herein refers to a direction which represents a figure when the entire moving path is considered to be one figure. For example, the term "direction of the entire moving path" refers to the direction of a portion of the periphery of the figure differing from the remaining portion (e.g., removed portion, protrusion, or curved portion of a linear shape), the direction of the representative figure, the axial direction of the figure (e.g., axis of rotation or axis of symmetry), or the direction of an approximate plane obtained by approximating the figure to one plane.

According to the above configuration, the process performed based on the operation input instruction associated with the moving path can be changed depending on the direction of the entire moving path in the three-dimensional coordinate system based on the direction of the game controller. For example, when the operation input instruction is "attack on enemy character" and the attack power or a damage value applied is the variable parameter, the degree of attack can be determined depending on the direction of the entire moving path. Therefore, the variations of the operation input which can be performed by inputting the moving path can be increased, whereby game playability can be increased.

In the method, a position condition relating to the game controller may be predetermined for each of the plurality of operation input instructions;

the method may further include determining a position of the game controller based on the acceleration information used to calculate the moving path; and

the determining the operation input instruction may include determining whether or not an operation input instruction among the plurality of operation input instructions has been issued, the operation input instruction being associated with path reference data conforming to the calculated moving path and satisfying the position condition with respect to the determined position of the game controller.

According to the above configuration, various operation inputs can be performed depending on the position condition of the game controller even when inputting the same moving path. Specifically, the player can perform various operation inputs even when inputting the same moving path depending on the position of the game controller with respect to the player. Since the number of operation inputs can be increased without increasing the number of figure patterns input by the player, game playability can be increased.

In the method, the controlling the game process may include changing a position of a specific object in a game space based on the calculated moving path.

According to the above configuration, the position of the specific object in the game space can be controlled depending on the moving path. Therefore, the difference between the game world and the real world can be reduced by allowing the player to observe a situation in which the moving path input by the player is used in the game as the movement of the object. In particular, when the specific object is part of the player character, the player character performs the same movement as the player. Therefore, the player is further involved with the player character, whereby the player is involved in the game.

The method may further include displaying an image of the calculated moving path.

According to the above configuration, an image of the calculated moving path can be displayed. The player is further involved with the player character by allowing the player to observe a situation in which the moving path input by the player is used in the game. Moreover, since the player can observe the moving path input by the player, the player attempts to more skillfully move the game controller when the image of the moving path displayed differs from the desired moving path, whereby the player is further involved in the game.

The method may further include:

detecting whether or not an operation input that indicates start of the movement of the game controller has been performed; and

detecting whether or not an operation input that indicates finish of the movement of the game controller has been performed,

the calculating the moving path may include calculating the moving path during a period from detection of the operation input that indicates start of the movement of the game controller to detection of the operation input that indicates finish of the movement of the game controller.

According to the above configuration, since the start and finish of the movement can be detected, an erroneous input can be prevented.

In the method, the calculating the moving path may include calculating the moving path subject to the condition that a position of the game controller when the operation input that indicates start of the movement of the game controller has been detected and a position of the game controller when the operation input that indicates finish of the movement of the game controller has been detected satisfy a specific position condition.

According to the above configuration, since the condition whereby the movement start position and the movement finish position satisfy a specific position condition is provided in advance, the movement of the player is specified (e.g., the player must move the game controller so that the movement start position and the movement finish position satisfy a specific position condition), whereby a game can be realized which requires operation skill. Therefore, the operation skill of the game controller, operation accuracy, and operation smoothness can be incorporated in the game instead of merely moving the game controller. This causes the player to intend to improve his skill, whereby interest in the game can be further increased in various ways.

In the method, the calculating the moving path may include calculating the moving path subject to the condition that a position of the game controller when the operation input that indicates start of the movement of the game controller has been detected is the same as a position of the game controller when the operation input that indicates finish of the movement of the game controller has been detected.

According to the above configuration, the player must move the game controller so that the movement start position and the movement finish position coincide. Specifically, since the player must move the game controller so that the moving path is drawn with one stroke, the player can easily move the game controller so that the game controller draws the desired moving path, whereby a relatively inexperienced player can enjoy the game.

In the method, the calculating the moving path may include calculating the moving path subject to the condition that 1) a velocity of the game controller when the operation input that indicates start of the movement of the game controller has been detected is zero and/or 2) a velocity of the game controller when the operation input that indicates finish of the movement of the game controller has been detected is zero.

According to the above configuration, the moving path can be more easily calculated by setting the condition whereby the game controller must be stopped when starting and/or finishing the operation input.

According to a further embodiment of the invention, there is provided a program causing the computer to execute one of the above methods.

According to still another embodiment of the invention, there is provided a computer-readable information storage medium storing the above program.

Embodiments to which the invention is applied are described below taking an example of executing a role-playing game (RPG) using a consumer game device. Note that the type of game to which the invention may be applied is not limited to a RPG.

Configuration of game device

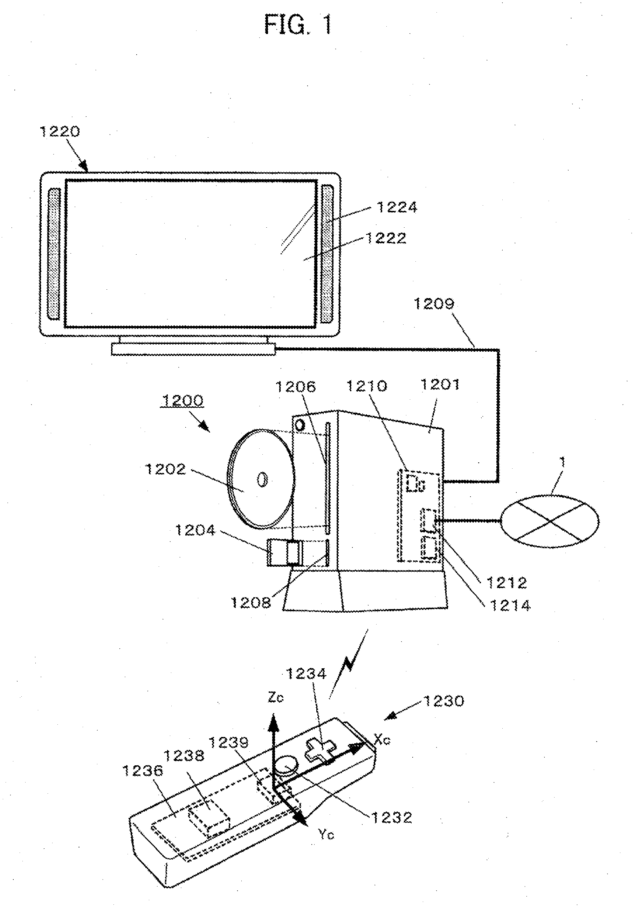

FIG. 1 is a system configuration diagram illustrative of a configuration example of a consumer game device according to one embodiment of the invention. A game device main body 1201 of a consumer game device 1200 includes a control unit 1210 provided with a CPU, an image processing LSI, an IC memory, and the like, and readers 1206 and 1208 for information storage media such as an optical disk 1202 and a memory card 1204. The consumer game device 1200 executes a given video game by reading a game program and various types of setting data from the optical disk 1202 and the memory card 1204 and causing the control unit 1210 to execute various game calculations based on an operation input performed using a game controller 1230.

The control unit 1210 includes electric/electronic instruments such as various processors, various IC chips, and IC memories, and performs calculations and the like to control each section of the consumer game device 1200. In this embodiment, the control unit 1210 includes a communication device 1212 which connects with a communication line 1 (e.g., Internet, LAN, or WAN) and implements data communication with an external device, and a short-distance wireless communication module 1214.

The short-distance wireless communication module 1214 receives an operation input signal transmitted from each game controller 1230 via short-distance wireless communication. As the short-distance wireless communication, Bluetooth (registered trademark), ultra-wideband (UWB) wireless communication, a wireless LAN, and the like may be appropriately applied.

The game controller 1230 according to this embodiment is generally in the shape of a stick. A button switch 1232 used for inputting selection, cancellation, timing, and the like and an arrow key 1234 for inputting forward, backward, left, and right directions are provided on the upper side of the game controller 1230. The game controller 1230 includes a controller control unit 1236.

The controller control unit 1236 includes electronic/electric elements such as an IC chip and an IC memory, a short-distance wireless communication module 1238, and an acceleration sensor 1239.

The acceleration sensor 1239 is an acceleration detector which detects acceleration along each of three orthogonal axes (Xc axis, Yc axis, and Zc axis). In the acceleration sensor 1239 according to this embodiment, the Xc axis is set along the long side direction of the game controller 1230, the Yc axis is set along the rightward direction of the game controller 1230, and the Zc axis is set along the upward direction of the game controller 1230.

The controller control unit 1236 implements data communication with the short-distance wireless communication module 1214 of the game device main body 1201 through the short-distance wireless communication module 1238, and transmits a detection signal of the acceleration detected by the acceleration sensor 1239 and an operation input signal corresponding to an operation input performed using the button switch 1232 and the arrow key 1234 to the game device main body 1201.

The control unit 1210 of the game device main body 1201 executes a role-playing game (RPG) while generating a game image and game sound based on the detection signal and the operation input signal received from the game controller 1230. The game image and the game sound generated by the control unit 1210 are output to a video display monitor 1220 connected with the game device main body 1201 via a signal cable 1209.

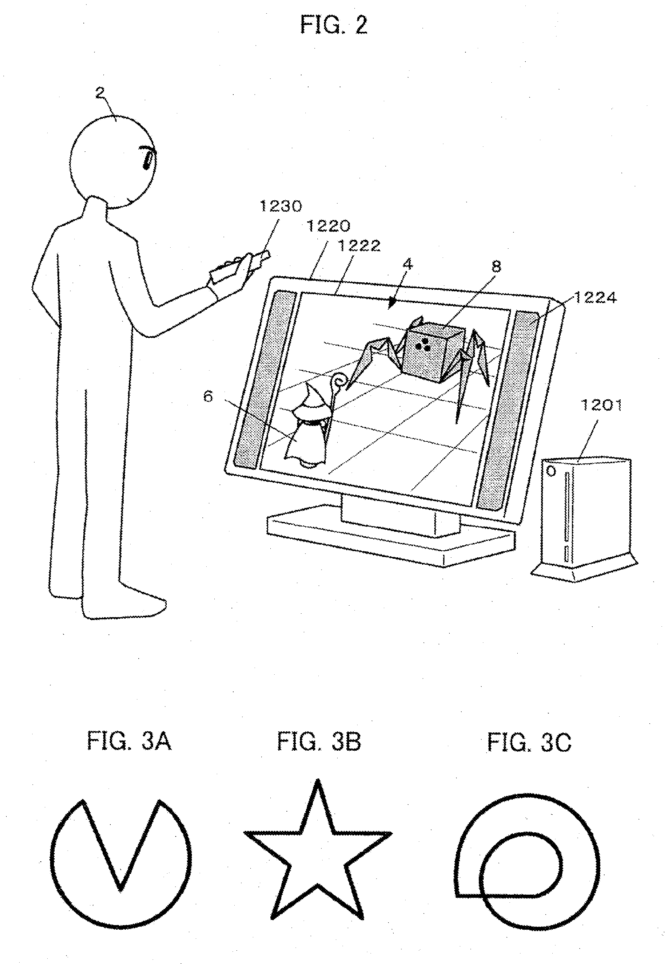

FIG. 2 is a schematic diagram showing a game play style according to this embodiment.

In this embodiment, a player 2 holds the game controller 1230 as if to hold a stick. The player 2 enjoys the game in front of the video display monitor 1220 by inputting various operations using the game controller 1230 while watching a game image 4 displayed on a display section 1222 and listening to game sound such as background music (BGM) and effect sound output from a speaker 1224. The game image 4 displayed is generated based on an image obtained by photographing a state in which an object of a player character 6 operated by the player 2 and an object of an enemy character 8 are disposed and controlled in terms of operation in a game space formed in a three-dimensional virtual space using a virtual camera, for example. In the RPG executed according this embodiment, the player 2 proceeds with the game while defeating the enemy character 8 using various types of magic by operating the player character 6 (the player character 6 is a wizard in this embodiment). A specific hit point is assigned to each enemy character 8. A damage value due to attack by the player character 6 is subtracted from the hit point. The enemy character is defeated when the hit point has become "0".

In this embodiment, the player 2 has been informed of a figure pattern which is a method of causing the player character 6 to practice magic by means of a manual or indication during game play. The player 2 can input a magic operation by moving the hand holding the game controller 1230 to draw a figure pattern such as those shown in FIGS. 3A to 3C. Specifically, the player 2 can input magic practiced by the player character 6 by three-dimensionally moving the game controller 1230 (i.e., changing the position of the game controller 1230) to draw a figure pattern. This operation is hereinafter called "magic actuation operation input".

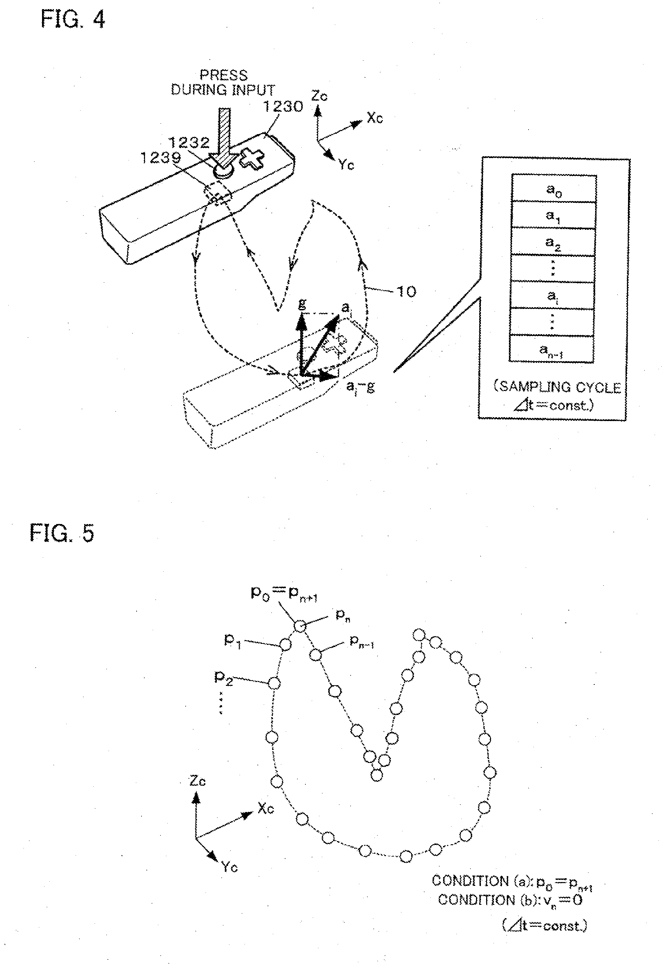

FIGS. 4 to 6 are schematic views illustrative of the principle of the magic actuation operation input according to this embodiment. As shown in FIG. 4, the magic actuation operation input according to this embodiment continues during a period in which the push button 1232 is pressed. The player changes the position of the game controller 1230 by moving the arm while pressing the push button 1232 so that a magic figure pattern is drawn by a moving path 10 of the game controller 1230. The player releases the push button 1232 when the player has completely drawn the figure pattern to finish the operation input.

In this embodiment, the magic figure pattern is set to be a two-dimensional figure which can be drawn with one stroke, as shown in FIG. 3. Each figure corresponds to a seal which causes magic. Operation input instructions for different types of magic are associated with respective figures. When the player performs a magic actuation operation input, three pieces of advice are given to the player by means of a manual or indication during the game. Specifically, the player is advised that (a) the input start position and the input finish position must be the same, (b) the movement of the game controller 1230 must be stopped at the input finish position, and (c) the inclination of the game controller 1230 must be kept constant during input as much as possible (i.e., the game controller 1230 must be moved parallelly).

The control unit 1210 samples accelerations $a$; (i=0, 1, 2, ..., n-1; a represents a three-dimensional vector in the XcYcZc coordinate system) detected by the acceleration sensor 1239 in a specific sampling cycle $\Delta t$ during a period in which the push button 1232 is pressed, and stores the sampled accelerations $a$; in the storage medium (e.g., IC memory) provided therein. The control unit 1210 calculates coordinate positions $p_i$ (i=0, 1, 2, ..., n+1; p represents three-dimensional coordinates in the XcYcZc coordinate system) from the sampled accelerations $a$; based on the above-described conditions.

A specific operation is as follows. Specifically, since the acceleration of gravity g is always applied to the game controller 1230, the acceleration $a_i$ detected by the acceleration sensor 1239 is a resultant force due to the acceleration of gravity g and the kinetic acceleration caused when moving the game controller 1230. Therefore, when the acceleration (true acceleration) due to only the operation of the player is referred to as $a_i$-g, a velocity $v_i$ (i=0, 1, 2, ..., n) is expressed by the following equation (1).

$$v_1 = v_0 + \Delta t(a_0 - g)$$

$$v_2 = v_1 + \Delta t(a_1 - g) = v_0 + \Delta t(a_0 + a_1) - 2\Delta t \cdot g$$

$$\vdots$$

$$v_i = v_0 + \Delta t \sum_{k=0}^{i-1} a_k - \Delta t \cdot i \cdot g \qquad \cdots\cdots\cdots(1)$$

$$\vdots$$

$$v_n = v_0 + \Delta t \sum_{k=0}^{n-1} a_k - \Delta t \cdot n \cdot g$$

From the equation (1), the position $p_i$ (i=0, 1, 2, ..., n+1) which is the position of the game controller 1230 during sampling is expressed by the following equation (2).

$$p_1 = p_0 + \Delta t \cdot v_0$$

$$p_2 = p_1 + \Delta t \cdot v_1 = p_0 + \Delta t(v_0 + v_1)$$

$$= p_0 + 2\Delta t \cdot v_0 + \Delta t^2 (a_0 - g)$$

$$\vdots$$

$$p_i = p_0 + \Delta t \sum_{k=0}^{i-1} v_k$$

$$= p_0 + \Delta t \cdot i \cdot v_0 + \Delta t^2 \sum_{k=0}^{i-2} [(i - k - 1)a_k] - \Delta t^2 \frac{(i-1)i}{2} g \qquad \cdots\cdots\cdots(2)$$

$$\vdots$$

$$p_{n+1} = p_0 + \Delta t \sum_{k=0}^{n} v_k$$

$$= p_0 + \Delta t(n+1)v_0 + \Delta t^2 \sum_{k=0}^{n-1} [(n - k)a_k] - \Delta t^2 \frac{n(n+1)}{2} g$$

When $S_1$ and $S_2$ are defined as shown by the following equations (3) and (4), the velocity $v_n$ and the position $p_{n+1}$ are expressed by the following equations (5) and (6).

$$S_1 = \sum_{k=0}^{n-1} a_k \qquad \cdots\cdots\cdots(3)$$

$$S_2 = \sum_{k=0}^{n-1} [(n-k)a_k] \qquad \cdots\cdots\cdots(4)$$

$$v_n = v_0 + \Delta t S_1 - \Delta t \cdot n \cdot g \qquad \cdots\cdots\cdots(5)$$

$$p_{n+1} = p_0 + \Delta t(n+1)v_0 + \Delta t^2 S_2 - \Delta t^2 \frac{n(n+1)}{2} g \qquad \cdots\cdots\cdots(6)$$

In this embodiment, since the conditions include (a) the condition whereby the input start position and the input finish position must be the same and (b) the condition whereby the movement of the game controller 1230 must be stopped at the input finish position, the following equations (7) and (8) are obtained from these conditions.

$$p_0 = p_{n+1} = 0 \qquad \cdots\cdots(7)$$

$$v_n = 0 \qquad \cdots\cdots(8)$$

From the equations (5) to (8), the acceleration of gravity g and the initial velocity $v_0$ are expressed by the following equations (9) and (10).

$$g = \frac{2}{n}S_1 - \frac{2}{n(n+1)}S_2 \qquad \cdots\cdots(9)$$

$$v_0 = \Delta t \left( S_1 - \frac{2}{n+1}S_2 \right) \qquad \cdots\cdots(10)$$

Therefore, the positions $p_i$ on the moving path 10 can be calculated in time series by substituting the equations (9) and (10) in the equation (2), as shown in FIG. 5. In FIG. 5, the positions $p_i$ thus calculated are indicated by open circles on the moving path 10 indicated by a broken line. A moving path function is obtained by calculating an approximate function (including straight line, spline, and the like) of all of the positions $p_i$.

When the acceleration sensor 1239 has a bias error, since the acceleration detected by the acceleration sensor 1239 always differs from the true value by an error e, the true acceleration is $(a_i\text{-}g\text{-}e)$. When applying the definition shown by the following equation, g in the above equations can be replaced with g'. Specifically, it is unnecessary to take into account the presence or absence of the bias error.

$$g' = g + e \qquad \cdots\cdots(11)$$

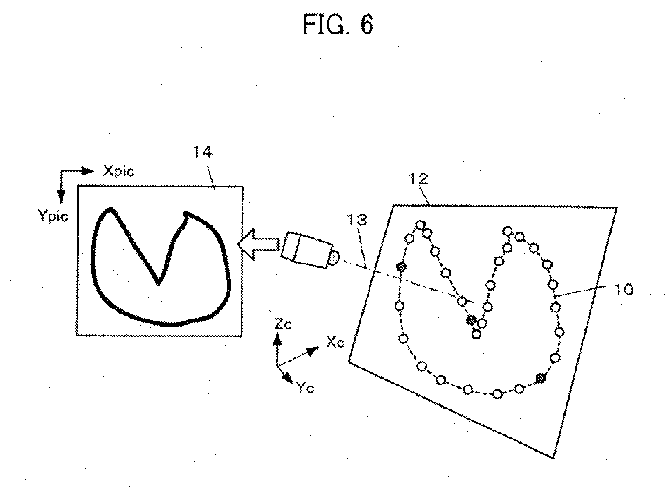

In this embodiment, since the magic figure pattern is a two-dimensional figure, an approximate plane 12 (plane in the XcYcZc coordinate system) approximate to the moving path 10 of the game controller 1230 is calculated, as shown in FIG. 6, in order to process the moving path 10 of the game controller 1230 as a two-dimensional figure. In this embodiment, three or more positions are randomly selected from the positions $p_i$, and a plane function which passes through the selected positions is calculated to obtain the approximate plane 12.

A path image 14 is then generated which is the approximate plane 12 viewed in a normal direction 13. The path image 14 may be obtained by connecting each position $p_i$ via a straight line, and observing the resulting image in the normal direction. Or, the path image 14 may be obtained by projecting the moving path function onto the approximate plane 12.

When the path image 14 has been obtained, a magic figure pattern most similar to the path image (i.e., figure with the highest degree of conformity) is determined, whereby the player character 6 can be caused to practice specific magic based on the moving path 10 of the game controller 1230. Specifically, the player can input a magic operation for the player character 6 by moving the arm so that the game controller 1230 draws a magic figure pattern instead of inputting an operation with the finger such as pressing the button switch or operating the lever.

Functional block

A functional configuration is described below.

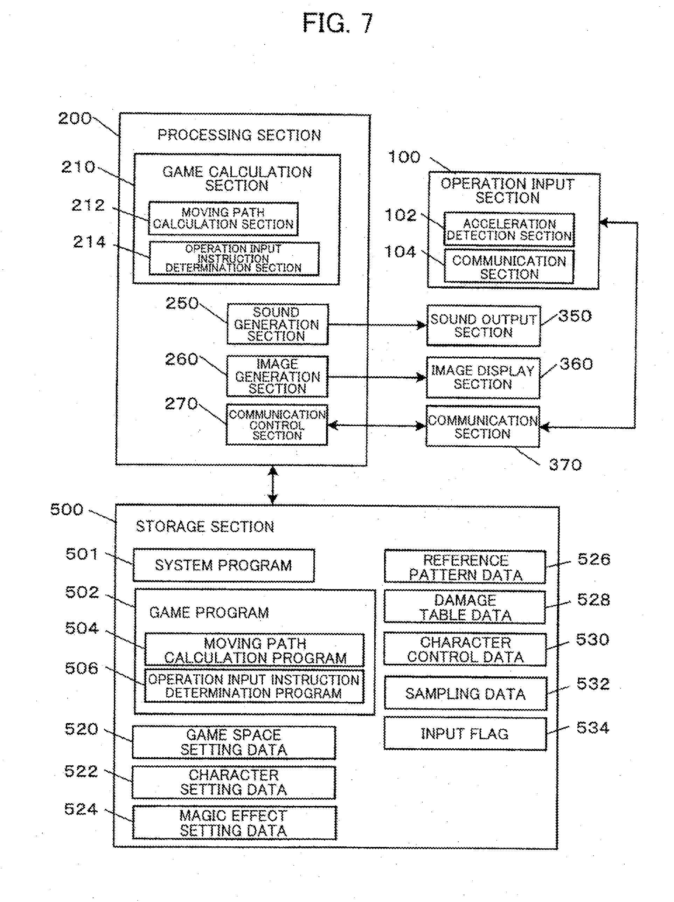

FIG. 7 is a block diagram showing an example of a functional configuration according to this embodiment. As shown in FIG. 7, the game device according to this embodiment includes an operation input section 100, a processing section 200, a sound output section 350, an image display section 360, a communication section 370, and a storage section 500.

The operation input section 100 outputs an operation input signal to the processing section 200 based on various operation inputs performed by a player. In FIG. 1, the game controller 1230 corresponds to the operation input section 100. The operation input section 100 according to this embodiment includes an acceleration detection section 102 which detects accelerations along three or more axial directions, and a communication section 104. The operation input section 100 outputs a detection signal corresponding to the acceleration detected by the acceleration detection section 102 to the processing section 200 together with the operation input signal via data communication between the communication section 104 and the communication section 370.

In FIG. 1, the acceleration sensor 1239 corresponds to the acceleration detection section 102. The detection method may be appropriately selected from a method of detecting a change in capacitance, a method of detecting a change in electric resistance using a piezoresistive effect or a strain gauge, a method utilizing a change in interference of an optical fiber, and the like.

The communication section 104 connects with the communication section 370 to implement data communication. The communication section 104 is implemented by a transceiver, a control circuit, and the like. In FIG. 1, the short-distance wireless communication module 1238 corresponds to the communication section 104.

The processing section 200 is implemented by electronic parts such as a processor (e.g., CPU), an application specific integrated circuit (ASIC), and an IC memory. The processing section 200 inputs and outputs data to and from each functional section of the game device 1200 including the operation input section 100 and the storage section 500, and controls the operation of the game device 1200 by performing various calculations based on a specific program, data, and various signals input from the operation input section 100. In FIG. 1, the control unit 1210 included in the game device main body 1201 corresponds to the processing section 200.

The game calculation section 210 performs game processes. For example, the game calculation section 210 performs a process of disposing various objects in a three-dimensional virtual space to form a game space, a process of disposing objects of a player character and an enemy character in the game space and controlling the positions and posture of the objects, an object hit determination process, physical calculations, game result calculations, and various timer processes. The game calculation section 210 includes a moving path calculation section 212 and an operation input instruction determination section 214.

The moving path calculation section 212 samples the acceleration $a_i$ which has occurred when the player has moved the game controller 1230 from the detection signal output from the acceleration detection section 102, and calculates the position $p_i$ from the information relating to the sampled acceleration $a_i$ to generate data relating to the moving path 10 of the game controller.

The data relating to the moving path includes coordinate data of the position $p_i$, the moving path function which is the approximate function of the position $p_i$, the approximate plane 12 obtained by approximating a position group to one plane, and the path image 14 which indicates a path obtained by converting the three-dimensional moving path into a two-dimensional plane image.

The operation input instruction determination section 214 determines an input operation input instruction based on the moving path from the data relating to the moving path 10 calculated by the moving path calculation section 212, and executes the determined operation input instruction based on a variable parameter.

In this embodiment, the operation input instruction determination section 214 determines an operation input instruction by matching the path image with reference patterns provided in advance, selecting one reference pattern with the highest degree of similarity, and selecting the operation input instruction associated in advance with the reference pattern. The term "operation input instruction" used in this embodiment corresponds to practicing magic. A damage value (variable parameter) applied to the enemy character due to the magic practiced is changed depending on parameters such as the orientation (position) and the size of the moving path. As the matching method, related art relating to pattern matching may be appropriately utilized. Therefore, detailed description thereof is omitted.

The sound generation section 250 is implemented by a processor such as a digital signal processor (DSP) and its control program. The sound generation section 250 generates sound signals of game-related effect sound, BGM, and operation sound based on the processing results of the game calculation section 210, and outputs the generated sound signals to the sound output section 350.

The sound output section 350 is implemented by a device which outputs sound such as effect sound and BGM based on the sound signals from the sound generation section 250. In FIG. 1, the speaker 1224 of the video display monitor 1220 corresponds to the sound output section 350.

The image generation section 260 is implemented by a processor such as a digital signal processor (DSP), its control program, a drawing frame IC memory such as a frame buffer, and the like. The image generation section 260 generates one game image in frame time (1/60 sec) units based on the processing results of the game calculation section 210, and outputs image signals of the generated game image to the image display section 360.

The image display section 360 displays various game images based on the image signals input from the image generation section 260. The image display section 360 may be implemented by an image display device such as a flat panel display, a cathoderay tube (CRT), a projector, or a head mount display. In FIG. 1, the display section 1222 of the video display monitor 1220 corresponds to the image display section 360.

The communication control section 270 establishes data communication and transmits/receives data according to a specific protocol to exchange data with an external device through the communication section 370.

The communication section 370 connects with the communication line 1 (see FIG. 1) to implement communication. The communication section 370 is implemented by a transceiver, a modem, a terminal adapter (TA), a jack for a communication cable, a control circuit, and the like. In FIG. 1, the communication device 1212 and the short-distance wireless communication module 1214 correspond to the communication section 370.

The storage section 500 stores a system program for implementing functions for causing the processing section 200 to integrally control the game device 1200, a game program and data necessary for causing the processing section 200 to execute the game, and the like. The storage section 500 is used as a work area for the processing section 200, and temporarily stores the results of calculations performed by the processing section 200 based on various programs, data input from the operation section 100, and the like. The function of the storage section 500 is implemented by an IC memory (e.g., RAM or ROM), a magnetic disk (e.g., hard disk), an optical disk (e.g., CD-ROM or DVD), or the like.

In this embodiment, the storage section 500 stores a system program 501 and a game program 502. The game program 502 includes a moving path calculation program 504 and an operation input instruction determination program 506. The function of the game calculation section 210 can be implemented by the processing section 200 by causing the processing section 200 to read and execute the game program 502. The functions of the moving path calculation section 212 and the operation input instruction determination section 214 can be implemented by the processing section 200 by causing the processing section 200 to read and execute the moving path calculation program 504 and the operation input instruction determination program 506.

The storage section 500 stores game space setting data 520, character setting data 522, magic effect setting data 524, reference pattern data 526, and damage TBL data 528 as data provided in advance. The storage section 500 also stores character control data 530, sampling data 532, an input flag 534, and the timer values of various timers as data appropriately rewritten during the game. The storage section 500 may also appropriately store other types of data.

Various types of data for forming the game space in the three-dimensional virtual space are stored as the game space setting data 520. For example, the game space setting data 520 includes model data and texture data relating to a stationary object (including the surface of the earth and background) on which the player character 6 moves and motion data.

Initial setting data of the player character 6 and the enemy character 8 is stored as the character setting data 522. Specifically, the character setting data 522 appropriately includes modeling data, texture data, and motion data of each character object, data relating to the movement pattern of the enemy character, the initial value of the hit point applied to the enemy character, and the like.

Data relating to an effect display when the player character 6 practices magic is stored as the magic effect setting data 524 while being associated with each type of magic. For example, when the magic is lightning magic, the magic effect setting data 524 includes an object, texture data, effect sound data, and the like for displaying a state in which lightning streaks across the sky.

The reference pattern data 526 defines the magic figure pattern used in the game and the operation input instruction corresponding to the magic figure pattern.

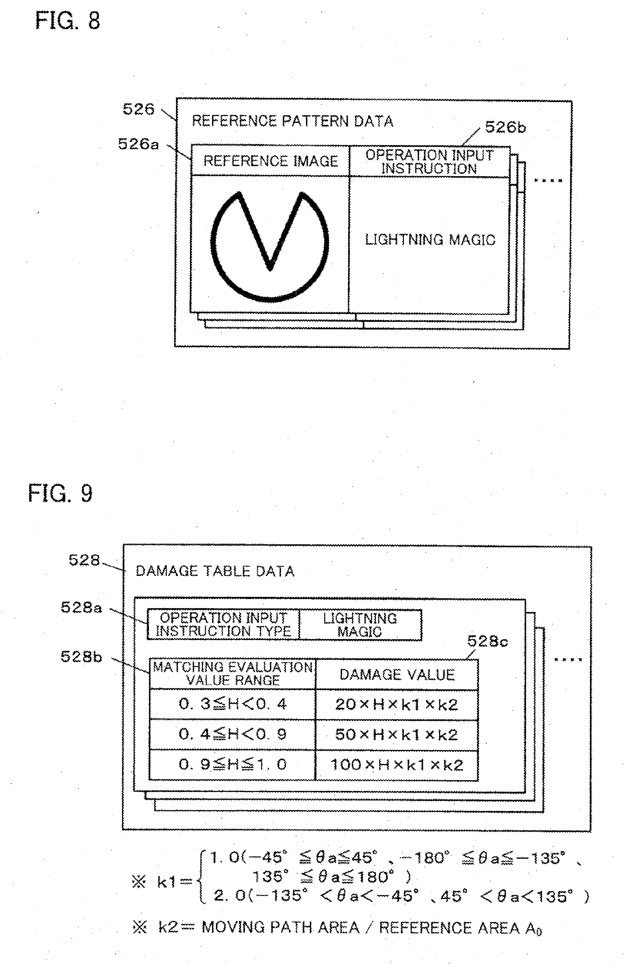

FIG. 8 is a data configuration diagram showing an example of the data configuration of the reference pattern data 526 according to this embodiment. As shown in FIG. 8, reference images 526a (i.e., information which defines different types of figure patterns) are stored as the reference pattern data 526 while being associated with different operation input instructions 526b.

The reference image 526a corresponds to dictionary data for pattern matching with the moving path of the game controller 1230. In this embodiment, since two-dimensional image pattern matching technology is used, two-dimensional image data is stored as the reference image 526a. The reference image may be appropriately set depending on the pattern matching technology. In this embodiment, a command which causes the player character 6 to practice magic is set as the operation input instruction 526b.

The damage TBL (table) data 528 defines the damage value applied to the enemy character 8 due to magic practiced by the player character 6.

FIG. 9 is a data configuration diagram showing a data configuration example of the damage TBL data 528 according to this embodiment. As shown in FIG. 9, a matching evaluation value range 528b and a damage value 528c are stored as the damage TBL data 528 while being associated with an operation input instruction type 528a corresponding to the operation input instruction defined by the reference pattern data 526.

The term "matching evaluation value" used herein refers to a value indicating the degree of similarity (or degree of conformity (degree of matching)) between the evaluation target (sample) and the reference pattern (also called "dictionary pattern") calculated during pattern matching. In this embodiment, the matching evaluation value H is calculated in the range of 0 to 1.0. The evaluation target is more similar to the reference pattern as the matching evaluation value H increases. In pattern matching, the degree of similarity between the evaluation target and the reference pattern is evaluated in terms of shape, and the difference in size between the evaluation target and the reference pattern is not evaluated. Note that the size of the evaluation target figure is employed as a coefficient k2 of the damage value applied to the enemy character 8. The details are described later.

In the example shown in FIG. 9, the range in which the matching evaluation value H is 0.3 to 1.0 is divided and defined as the matching evaluation value range 528b. In this embodiment, when the matching evaluation value H is less than 0.3, it is determined that matching has failed (i.e., the magic actuation input has failed).

The damage value 528c is defined as a function of the matching evaluation value H and coefficients k1 and k2 of the variable parameter. In this embodiment, the first coefficient k1 is defined depending on the angle $\theta a$ ($-180° \leq \theta a \leq 180°$) of the normal direction of the approximate plane 12 around the Zc axis (where the Xc axis direction of the acceleration sensor 1239 is 0°). Specifically, the direction of the entire moving path is represented by the approximate plane 12 and its normal direction 13, and the first coefficient k1 is determined depending on the direction of the entire moving path. The second coefficient k2 is defined depending on the ratio of an area obtained by parallelly projecting the moving path 10 in the normal direction 13 to a reference area $A_0$ (e.g., 1000 cm$^2$). Specifically, the second coefficient k2 is determined depending on the size of the entire moving path.

In the example shown in FIG. 9, the first coefficient k1 is set at 1.0 when it is determined that the moving path has been drawn along the lateral direction of the game controller 1230, and is set at 2.0 when it is determined that the moving path has been drawn along the vertical direction of the game controller 1230.

In this embodiment, since the player holds the game controller 1230 as if to hold a stick, when the player moves the game controller 1230 along the horizontal direction (Yc-Zc plane direction in FIG. 1), the player can observe the path from the movement of the game controller 1230 and relatively easily draw a desired figure pattern. On the other hand, when the player moves the game controller 1230 along the vertical direction (Xc-Zc plane direction in FIG. 1), since the moving path is formed along the direction parallel to the field of view of the player, it is difficult for the player to observe the path. As a result, the degree of difficulty relatively increases even when drawing the same figure pattern. Therefore, a higher damage value can be applied to the enemy character when the player moves the game controller 1230 with a higher degree of difficulty by decreasing the coefficient k1 in the former case and increasing the coefficient k1 in the latter case. Specifically, strong magic can be effected by drawing the moving path with a difficult operation. This causes the player to be further involved in the game.

The second coefficient k2 increases as the player draws a larger path of the game controller 1230 so that the damage value applied to the enemy character 8 increases. Therefore, the second coefficient k2 has effects similar to those of the first coefficient k1.

Data relating to movement control of the player character 6 and the enemy character 8 is stored as the character control data 530. For example, the present position coordinates, a hit point, an item, motion data used, a frame number, and the like may be appropriately set as the character control data 530.

Data relating to the magic actuation operation input is stored as the sampling data 532.

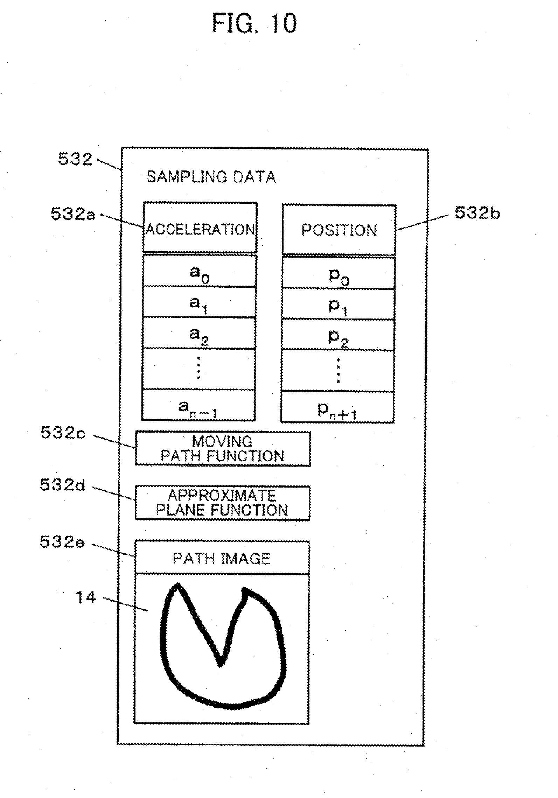

FIG. 10 is a view showing a data configuration example of the sampling data 532 according to this embodiment. As shown in FIG. 10, accelerations 532a sampled and stored in time series when the button switch 1232 is pressed, positions 532b calculated from the sampled accelerations, a moving path function 532c which is the approximate function of all the positions corresponding to the moving path, an approximate plane function 532d of the approximate plane 12 obtained by approximating the moving path function formula 532c to one plane, and a path image 532e are stored as the sampling data 532.

The input flag 534 is a flag indicating that the magic actuation operation input is being performed. The input flag 534 is set at "0" in the initial state, and the input flag 534 is set at "1" when the magic actuation operation input has been performed.

Operation

An operation according to this embodiment is described below.

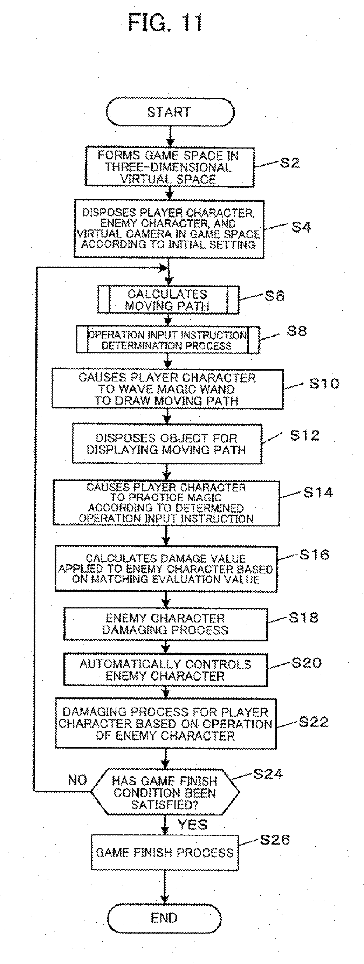

FIG. 11 is a flowchart illustrative of the flow of the process according to this embodiment. This process is implemented by causing the processing section 200 to read and execute the system program 501 and the game program 502, and is repeatedly performed in a specific control cycle. A game image generation process and output process and a game sound generation process and output process may be appropriately performed in the same manner as in a related-art video game. Therefore, description thereof is omitted.

As shown in FIG. 11, the game calculation section 210 forms a game space in a three-dimensional virtual space referring to the game space setting data 520 and the character setting data 522 (step S2), and disposes objects of the player character 6 and the enemy character 8 and a main virtual camera which photographs the player character 6 and the enemy character 8 in the formed game space to prepare for game start (step S4).

When the game has started, the game calculation section 210 performs a moving path calculation process (step S6).

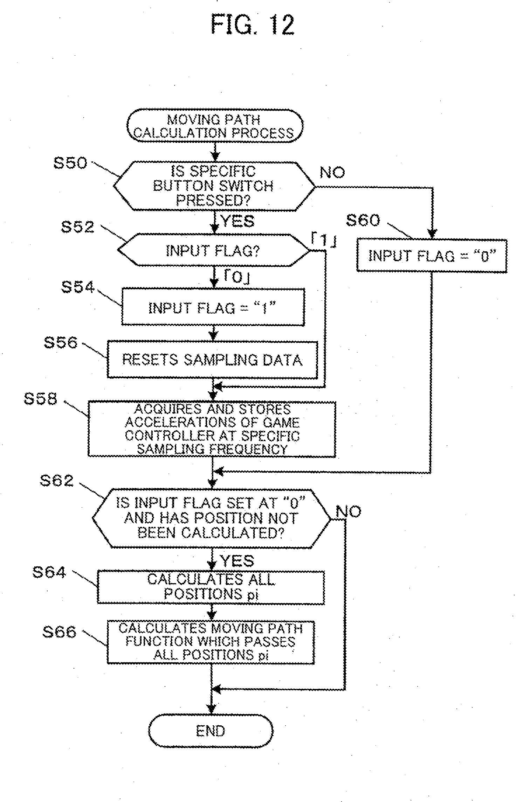

FIG. 12 is a flowchart illustrative of the flow of the moving path calculation process according to this embodiment. As shown in FIG. 12, the game calculation section 210 determines whether or not a specific button switch is pressed to determine whether or not a magic actuation operation input start condition is satisfied (step S50). In this embodiment, the game calculation section 210 determines that the magic actuation operation input is performed when the push button 1232 of the game controller 1230 is pressed. Therefore, the game calculation section 210 determines that the specific button switch is pressed (YES) when the push button 1232 is pressed.

When the specific button switch is pressed (YES in step S50), the game calculation section 210 refers to the input flag 534 which indicates whether or not the magic actuation operation input is being performed. When the input flag 534 is "0" ("0" in step S52), the game calculation section 210 sets the input flag 534 at "1" (step S54), and resets the sampling data 532 (step S56). The reset state is determined in advance such as setting all the pieces of sampling data 532 at "0". When the input flag 534 has been set at "1" ("1" in step S52), the game calculation section 210 does not change the input flag 534 and does not reset the sampling data 532.

The game calculation section 210 then acquires the present acceleration of the game controller 1230 at a specific sampling frequency based on the detection signal from the acceleration detection section 102, and stores the acquired accelerations as the sampling data 532 in time series (step S58). The game calculation section 210 may sample the acceleration once when the sampling frequency is the same as the control cycle of the process flow, and may sample the acceleration a number of times when the sampling frequency is sufficiently higher than the control cycle (e.g., frame time intervals such as 1/60 second).

When the game calculation section 210 has determined that the specific button switch is not pressed in the step S50 (NO in step S50), the game calculation section 210 determines that the player has completed the magic actuation operation input, and sets the input flag 534 at "0" (step S60) without sampling the acceleration.

The game calculation section 210 then determines whether or not the position $p_i$ can be calculated. Specifically, the game calculation section 210 determines whether or not the input flag 534 is set at "0" (which indicates completion of sampling) and the position 532b of the sampling data 532 has been reset and has not been calculated (step S62).

When the game calculation section 210 has determined that the input flag 534 is set at "0" and the position 532b of the sampling data 532 has been reset and has not been calculated (YES in step S62), the game calculation section 210 calculates all positions $p_i$ and stores the calculated positions $p_i$ as the sampling data 532 (step S64). The game calculation section 210 calculates a moving path function which approximates the calculated positions $p_i$, stores the calculated moving path function as the sampling data 532 (step S66), and finishes the moving path calculation process. As the method of calculating the moving path function, a known approximate function calculation method may be appropriately utilized.

When the input flag 534 is set at "1" and the operation input has not been completed, or all positions $p_i$ have been calculated in the step S62 (YES in step S62), the game calculation section 210 finishes the moving path calculation process without calculating the positions $p_i$ and the moving path function.

When the moving path calculation process has been completed, the process returns to the flow shown in FIG. 11. The game calculation section 210 then performs an operation input instruction determination process (step S8).

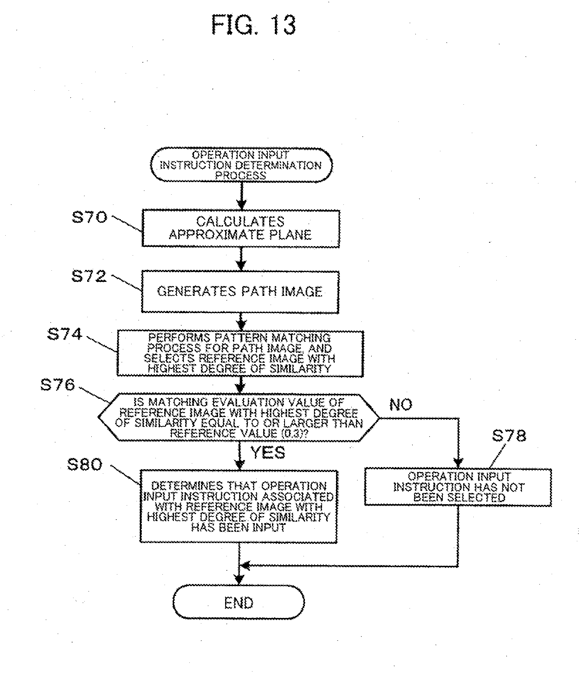

FIG. 13 is a flowchart illustrative of the flow of the operation input instruction determination process according to this embodiment. As shown in FIG. 13, the game calculation section 210 calculates an approximate plane function of the approximate plane 12, and stores the calculated approximate plane function as the sampling data 532 (step S70). For example, three positions may be randomly selected from the positions $p_i$ calculated in advance, and a plane function which passes through the selected positions may be calculated. Or, positions having the maximum and minimum coordinate values may be extracted with respect to each of the Xc axis, the Yc axis, and the Zc axis, and the approximate plane may be calculated from the extracted positions.

The game calculation section 210 then generates the path image 14, and stores the generated path image 14 as the sampling data 532 (step S72). For example, when all of the positions $p_i$ have a sufficient resolution, points with a specific size may be drawn at a projection position in the normal direction 13 of the calculated approximate plane 12 to draw the path as a set of points to obtain an image. Or, the moving path function 532c calculated in advance may be projected onto the approximate plane 12 in the normal direction 13 to obtain an image.

The game calculation section 210 performs a pattern matching process for the path image 14 referring to the reference pattern data 526, and selects one reference image 526a with the highest matching evaluation value H (step S74).

When the matching evaluation value H of the selected reference image 526a with the highest degree of similarity is less than 0.3 (NO in step S76), the game calculation section 210 determines that an input error has occurred and the operation input instruction has not been selected (step S78), and finishes the operation input instruction determination process.

When the matching evaluation value H of the reference image 526a with the highest degree of similarity is 0.3 or more (YES in step S76), the game calculation section 210 determines that the operation input instruction 526b associated with the reference image 526a has been input (step S80), and finishes the operation input instruction determination process.

When the operation input instruction determination process has been completed, the process returns to the flow shown in FIG. 11. The game calculation section 210 then moves the position of an object of a magic wand possessed by the player character 6 along the moving path 10 in the game space so that the player character 6 draws the moving path 10 in the air using the magic wand (step S10). The game calculation section 210 generates an object for displaying the moving path 10, and disposes the object at the end of the magic wand waved by the player character 6 (step S12).

As the object for displaying the moving path 10, an object generated by changing the luminance of the path image 532e so that the path image 532e emits light and providing the path image 532e over a planar polygon, a strip-shaped polygon model generated by tracing the moving path function 532c, or the like may be appropriately set.

The game calculation section 210 then causes the player character 6 to practice magic according to the operation input instruction determined by the operation input instruction determination process (step S14). For example, the game calculation section 210 refers to the magic effect setting data 524. When the magic is lightning magic, the game calculation section 210 causes lightning to streak across the sky and hit the enemy character 8.

The game calculation section 210 the calculates the damage value applied to the enemy character based on the matching evaluation value H of the reference image with the highest degree of similarity selected in the step S8 (step S16). Specifically, the game calculation section 210 refers to the damage TBL data 528, and selects the range corresponding to the matching evaluation value H from the matching evaluation value range 528b. The game calculation section 210 then refers to the approximate plane 532d of the sampling data 532, calculates the angle $\theta a$ ($-180° \leq \theta a \leq 180°$) of the normal direction 13 of the approximate plane 12 around the Zc axis (where the Xc axis direction of the acceleration sensor 1239 is 0°), and determines the first coefficient k1 corresponding to the angle $\theta a$ calculated according to the definition of the damage TBL data 528 (see FIG. 9). The game calculation section 210 refers to the path image 532e of the sampling data 532, and determines the second coefficient k2 depending on the area of the moving path image 14 relative to the specific reference area $A_0$ (see FIG. 9). The game calculation section 210 calculates the damage value applied to the enemy character 8 according to the definition of the damage value 528c associated with the range of the matching evaluation value H selected in advance.

The game calculation section 210 then performs an enemy character damaging process (step S18). In this embodiment, the calculated damage value is subtracted from the hit point set for the enemy character subjected to the magic attack. When the hit point after subtraction has reached "0", it is determined that the enemy character cannot be used (i.e., has been defeated by the player character). The game calculation section 210 automatically controls the operation of the enemy character 8 which can be used (step S20). The game calculation section 210 automatically controls operations such as attack on the player character 6, recovery from damage, and escape based on a specific thinking routine in the same manner as in a known RPG.

The game calculation section 210 then performs a damaging process for the player character 6 based on the operation of the enemy character 8 (step S22). Specifically, the damage value due to attack by the enemy character is subtracted from the hit point of the player character.

The game calculation section 210 then determines whether or not a game finish condition has been satisfied (step S24). Since this embodiment employs an RPG, the game calculation section 210 determines that the game finish condition has been satisfied when the hit point of the player character 6 has reached "0", or the player character 6 has defeated all enemy characters 8, or the player character 6 has acquired the desired treasure, for example.

When the game calculation section 210 has determined that the game finish condition has not been satisfied (NO in step S24), the game calculation section 210 returns to the step S6. When the game calculation section 210 has determined that the game finish condition has been satisfied (YES in step S24), the game calculation section 210 performs a specific game finish process such as displaying an ending image (step S26), and finishes the process.

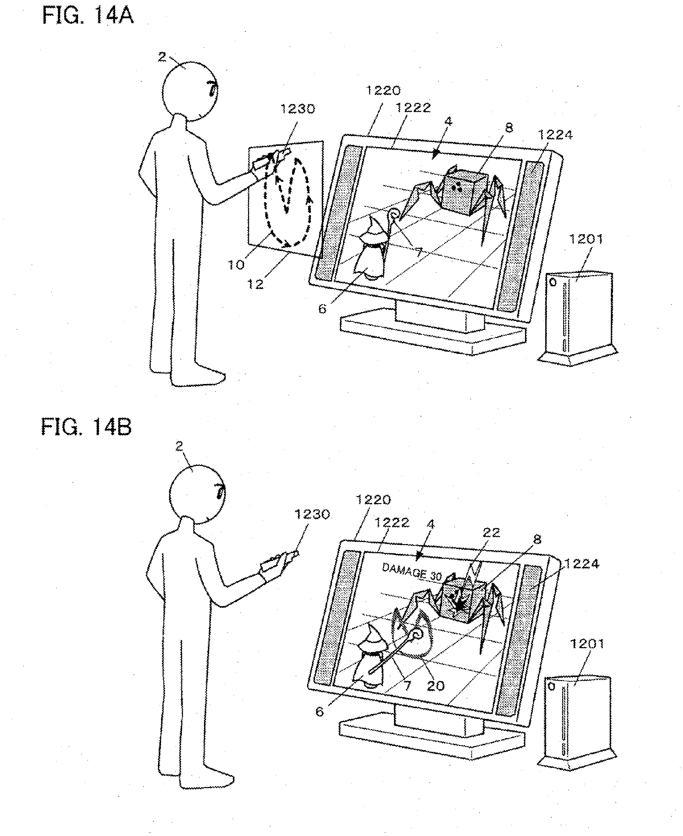

FIGS. 14A and 14B are schematic views showing an example of game play according to this embodiment. In FIG. 14A, the player character 6 has encountered the enemy character 8 on the game screen 4. When the player 2 moves the game controller 1230 parallelly along the moving path 10 indicated by a broken line shown in FIG. 14A so that the game controller 1230 draws a magic figure pattern of the desired magic, the game device main body 1201 determines that the player 2 has performed the magic actuation operation input for lightning magic based on the moving path 10.

As shown in FIG. 14B, the operation of the player character 6 is controlled so that the player character 6 draws a figure similar to the moving path 10 using the end of a magic wand 7 and a figure based on the path image 14 (e.g., a light streak 20 drawn in the air) is displayed, whereby a seal is drawn in the air. The light streak 20 may be formed by changing the luminance and the color of the path image 14 so that the path image 14 emits light and providing the path image 14 over a planar polygon of which the normal direction coincides with the direction of a line segment which connects the player character 6 and the enemy character 8. An effect in which the enemy character 8 is struck by lightning 22 is displayed, whereby the enemy character 8 is damaged.

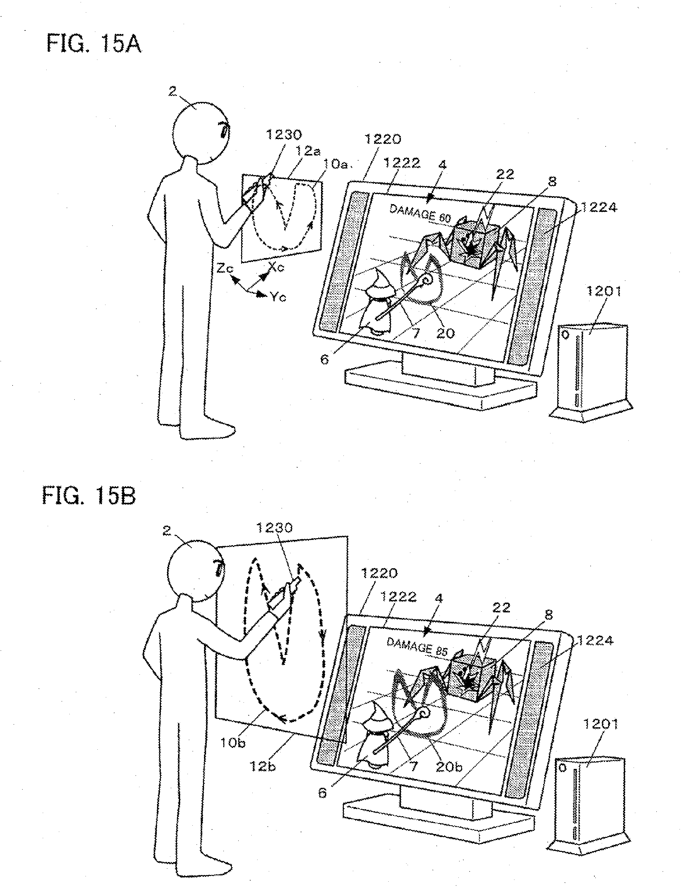

FIGS. 15A and 15B are views showing variations of the magic actuation operation input according to this embodiment. FIG. 15A shows the case of performing the magic actuation operation input by moving the game controller 1230 parallelly along the vertical direction (Xc-Zc plane) instead of the lateral direction (Yc-Zc plane). When the player moves the game controller 1230 parallelly along the lateral direction, as shown in FIG. 14A, since the player can observe the entire moving path within the field of view, the player can relatively easily draw the path of the desired figure pattern. On the other hand, when the player moves the game controller 1230 parallelly along the vertical direction, it is difficult for the player to observe the moving path since the moving path is parallel (depth direction) to the line of sight of the player. This makes it difficult for the player to draw the path of the desired figure pattern. When the player moves the game controller 1230 in the vertical direction, since the normal direction of the approximate plane 12a of the moving path 10a almost coincides with the Yc axis (horizontal direction) of the game controller 1230, the angle θa formed by the normal direction of the approximate plane 12a and the Xc-Zc plane is almost 90° or -90°. The damage TBL data 528 according to this embodiment is selected so that the first coefficient k1 is set at 2.0, which is larger than that of the state shown in FIG. 14A, whereby the damage value applied to the enemy character 8 increases (see FIG. 9). Therefore, the enemy can be damaged to a larger extent as the degree of difficulty of the input operation becomes higher.

FIG. 15B shows the case of moving the game controller 1230 so that the game controller 1230 draws a figure (path) larger than that shown in FIG. 14A. In this case, since the player must move the arm to a large extent, it becomes more difficult to accurately draw the magic figure pattern. In this embodiment, since the second coefficient k2 is determined depending on the ratio of the area of the moving path image 14 to the specific standard area $A_0$, the second coefficient k2 in the case shown in FIG. 15B is larger than that of FIG. 14A. As a result, the damage value applied to the enemy character 8 increases. Moreover, since the size of the path image 14 is increased corresponding to the large moving path 10b, the size of the light streak 20b automatically displayed is also increased. Therefore, the player can easily visually identify that strong magic is effected.

As described above, the player 2 does not operate the game controller 1230 using the finger, but causes the player character 6 to perform movement similar to the movement of the player 2. Moreover, since the moving path can be used for operation input merely using the acceleration sensor, the operation input can be realized at low cost and low calculation load.

The damage value applied to the enemy character can be increased by performing operation input to draw a path as similar to the reference pattern as possible. Specifically, the player feels that the player's magic input skill (i.e., skill of moving the controller 1230 as if to draw a seal using the magic wand) is reflected in the damage value. This is because the damage caused by the magic increases when the player moves (moves the controller) to more accurately draw the seal. Therefore, the player can enjoy the game while further involving himself with the player character (wizard in this case), while achieving the effect in which the player can perform operation input by merely moving his body. Moreover, since the enemy character can be damaged to a larger extent by selecting an input method with a higher degree of difficulty when drawing a path, the input by movement is provided with complexity and depth, whereby interest in the game can be further increased.

The conditions whereby the position $p_i$ is derived from the acceleration sampled during the magic actuation operation input include (a) the condition whereby the input start position and the input finish position must be the same and (b) the condition whereby the movement of the game controller 1230 must be stopped at the input finish position. These conditions apply to the case where a person draws a figure pattern in the air by moving the game controller 1230. Specifically, when drawing a figure pattern, a person naturally imagines the desired figure pattern. Then, he gradually lifts his arm, immediately draws the figure pattern, and stops the movement when he has completely drawn the figure pattern. Therefore, a more natural operation input is enabled by setting the conditions according to this embodiment, whereby operability can be increased.

Hardware configuration

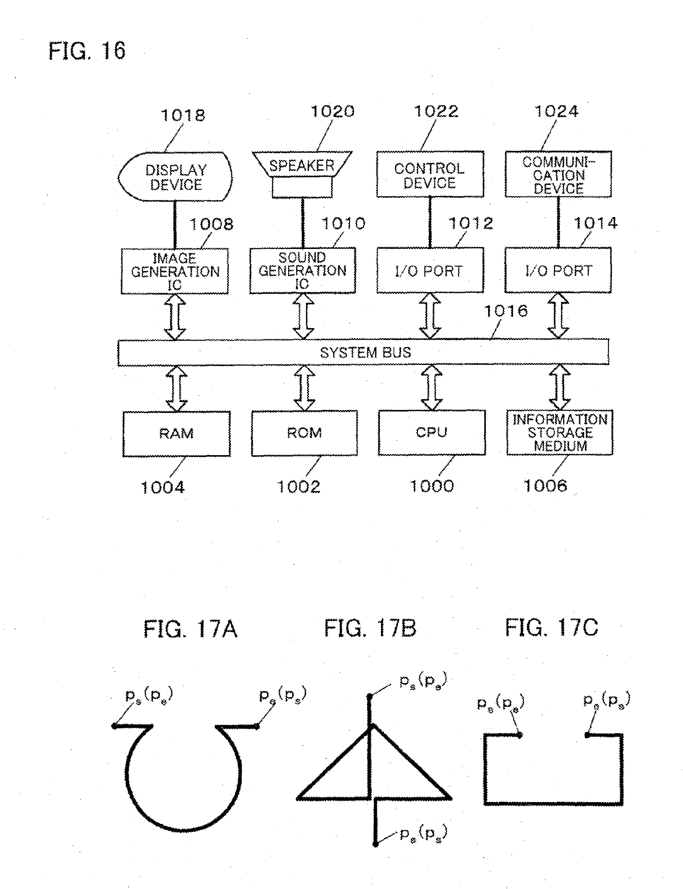

FIG. 16 is a view illustrative of an example of a hardware configuration which implements the consumer game device 1200 according to this embodiment. In the consumer game device 1200, a CPU 1000, a ROM 1002, a RAM 1004, an information storage medium 1006, an image generation IC 1008, a sound generation IC 1010, and I/O ports 1012 and 1014 are connected so that data can be input and output through a system bus 1016. A control device 1022 is connected with the I/O port 1012, and a communication device 1024 is connected with the I/O port 1014.

The CPU 1000 controls the entire device and performs various types of data processing based on a program stored in the information storage medium 1006, a system program (e.g. initialization information of the device main body) stored in the ROM 1002, a signal input from the control device 1022, and the like.

The RAM 1004 is a storage section used as a work area for the CPU 1000 and the like, and stores given information stored in the information storage medium 1006 and the ROM 1002, calculation results of the CPU 1000, and the like.

The information storage medium 1006 mainly stores a program, image data, sound data, play data, and the like. As the information storage medium, a memory such as a ROM, a hard disk, a CD-ROM, a DVD, a magnetic disk, an optical disk, or the like is used. The information storage medium 1006, the ROM 1002, and the RAM 1004 correspond to the storage section 500 shown in FIG. 7.

Sound and an image can be suitably output using the image generation IC 1008 and the sound generation IC 1010 provided in the device.

The image generation IC 1008 is an integrated circuit which generates pixel information according to instructions from the CPU 1000 based on information transmitted from the ROM 1002, the RAM 1004, the information storage medium 1006, and the like. An image signal generated by the image generation IC 1008 is output to a display device 1018. The display device 1018 is implemented by a CRT, an LCD, an ELD, a plasma display, a projector, or the like. The display device 1018 corresponds to the image display section 360 shown in FIG. 7.

The sound generation IC 1010 is an integrated circuit which generates a sound signal corresponding to the information stored in the information storage medium 1006 and the ROM 1002 and sound data stored in the RAM 1004 according to instructions from the CPU 1000. The sound signal generated by the sound generation IC 1010 is output from a speaker 1020. The speaker 1020 corresponds to the sound output section 350 shown in FIG. 7.

The control device 1022 is a device which allows the player to input a game operation. The function of the control device 1022 is implemented by hardware such as a lever, a button, and a housing. The control device 1022 corresponds to the operation input section 100 shown in FIG. 7.

A communication device 1024 exchanges information utilized in the device with the outside. The communication device 1024 is utilized to exchange given information corresponding to a program with other devices. The communication device 1024 corresponds to the communication section 370 shown in FIG. 7.

The above-described processes such as the game process are implemented by the information storage medium 1006 which stores the game program 502 and the like shown in FIG. 7, the CPU 1000, the image generation IC 1008, and the sound generation IC 1010 which operate based on these programs, and the like. The CPU 1000, the image generation IC 1008, and the sound generation IC 1010 correspond to the processing section 200 shown in FIG. 7. The CPU 1000 mainly corresponds to the game calculation section 210, the image generation IC 1008 mainly corresponds to the image generation section 260, and the sound generation IC 1010 mainly corresponds to the sound generation section 250.

The processes performed by the image generation IC 1008, the sound generation IC 1010, and the like may be executed by the CPU 1000, a general-purpose DSP, or the like by means of software. In this case, the CPU 1000 corresponds to the processing section 200 shown in FIG. 7.

Although the above description illustrates a configuration in which the video game is executed using the consumer game device 1200 as an example, the game may also be executed using an arcade game device, a personal computer, a portable game device, and the like.

The embodiments according to the invention have been described above. Note that the application of the invention is not limited to the above embodiments. Various modifications and variations may be made without departing from the spirit and scope of the invention.

First modification

For example, the above embodiments have been described in which the conditions when calculating the position $p_i$ from the sampled acceleration $a_i$ include (a) the input start position and the input finish position must be the same, (b) the movement of the game controller 1230 must be stopped at the input finish position, and (c) the inclination of the game controller 1230 must be kept constant during input as much as possible. Note that the invention is not limited thereto.

As shown in FIGS. 17A to 17C, the player's operation input of the magic figure pattern may be specified so that an input start position $p_s$ and an input finish position $p_e$ are separated at a predetermined distance, for example. In this case, the moving path can be calculated by setting (aB) a condition whereby the input finish position must be separated from the input start position by a specific distance in a specific direction and (bB) a condition whereby the movement of the game controller 1230 must be stopped at the input finish position as conditions B.

Specifically, the conditions B are expressed by the following equations (12) to (14).

$$p_0 = 0 \qquad \cdots\cdots\cdots(1\ 2)$$

$$p_{n+1} = p_e \qquad \cdots\cdots\cdots(1\ 3)$$

$$v_n = 0 \quad \cdots\cdots(1\ 4)$$

From the equations (5), (6), and (12) to (14), the acceleration of gravity g and the initial velocity $v_0$ are expressed by the following equations (15) and (16).

$$g = \frac{2}{n(n+1)}\frac{p_e}{\Delta t^2} + \frac{2}{n}S_1 - \frac{2}{n(n+1)}S_2 \quad \cdots\cdots(1\ 5)$$

$$v_0 = \frac{2}{n+1}\frac{p_e}{\Delta t} + \Delta t\left(S_1 - \frac{2}{n+1}S_2\right) \quad \cdots\cdots(1\ 6)$$

Therefore, the positions $p_i$ can be calculated in time series by substituting the equations (12), (15), and (16) in the equation (2) in the above embodiment.

Second modification

Other conditions may be used provided that the moving path can be calculated. For example, even when specifying the figure pattern input as shown in FIGS. 17A and 17C, (aC) a condition whereby the input finish position must be separated from the input start position by a specific distance in a specific direction and (bC) a condition whereby an input must be started in a state in which the movement of the game controller 1230 is stopped at the input start position may be set as conditions C. In this case, the conditions C are expressed by the following equations (17) to (19).

$$p_0 = 0 \quad \cdots\cdots(1\ 7)$$

$$p_{n+1} = p_e \quad \cdots\cdots(1\ 8)$$

$$v_0 = 0 \quad \cdots\cdots(1\ 9)$$

From the equations (17) to (19), the acceleration of gravity g is calculated as shown by the following equation (20).

$$g = -\frac{2}{n(n+1)}\frac{p_e}{\Delta t^2} + \frac{2}{n(n+1)}S_2 \quad \cdots\cdots(2\ 0)$$

Therefore, the positions $p_i$ can be calculated in time series by substituting the equations (17), (19), and (20) in the equation (2) in the above embodiment.

Third modification

For example, (aD) a condition whereby an input must be started in a state in which the movement of the game controller 1230 is stopped at the input start position and (bC) a condition whereby the movement of the game controller 1230 must be stopped at the input finish position may be set as conditions D. The conditions D are expressed by the following equations (21) and (22).

$$p_0 = 0 \qquad \cdots\cdots\cdots(21)$$

$$v_0 = v_n = 0 \qquad \cdots\cdots\cdots(22)$$

From the equation (5) in the above embodiment and the equation (22), the acceleration of gravity g is calculated as shown by the following equation (23).

$$g = \frac{1}{n} S_1 \qquad \cdots\cdots\cdots(23)$$

Therefore, the positions $p_i$ can be calculated in time series by substituting the equations (21) to (23) in the equation (2) in the above embodiment.

Other modifications

The above embodiments have been described taking an example in which the player character 6 is controlled to draw the moving path 10 using the magic wand. Note that the invention is not limited thereto. For example, a configuration may also be employed in which a spirit character or a character having a magic attribute (e.g., flame character when the moving path corresponds to a flame magic operation input instruction) may appear in the game, and the character draws the moving path 10.

The above embodiments have been described taking an example in which only one game controller 1230 is used, Note that two or more game controllers 1230 may be used. In this case, the player plays the game while holding first and second game controllers 1230 respectively including an identifiable acceleration sensor 1239 with both hands, for example. The player performs an operation input by moving both hands at the same time. A first moving path is calculated based on the acceleration detected by the acceleration sensor of the first game controller held with the right hand, and a second moving path is calculated based on the acceleration detected by the acceleration sensor of the second game controller held with the left hand. A synthesized moving path is generated by synthesizing the first moving path and the second moving path so that the centers thereof coincide. Or, a synthesized path image is generated by synthesizing the image of the first moving path and the image of the second moving path. The operation input instruction may be determined based on the synthesized moving path or the synthesized path image. In this case, since a more complicated and advanced operation input can be performed, the variations of the operation input can be increased, whereby game operability can be further increased.

The above embodiments have been described taking an example in which the variable parameter (coefficient k1) is changed depending on the direction of the moving path 10 with respect to the game controller 1230 using the approximate plane 12 to change the damage value. Another variable parameter (coefficient k2) is changed depending on the size of the path image 14 to change the damage value. Note that the variable parameters may be appropriately set in another way.

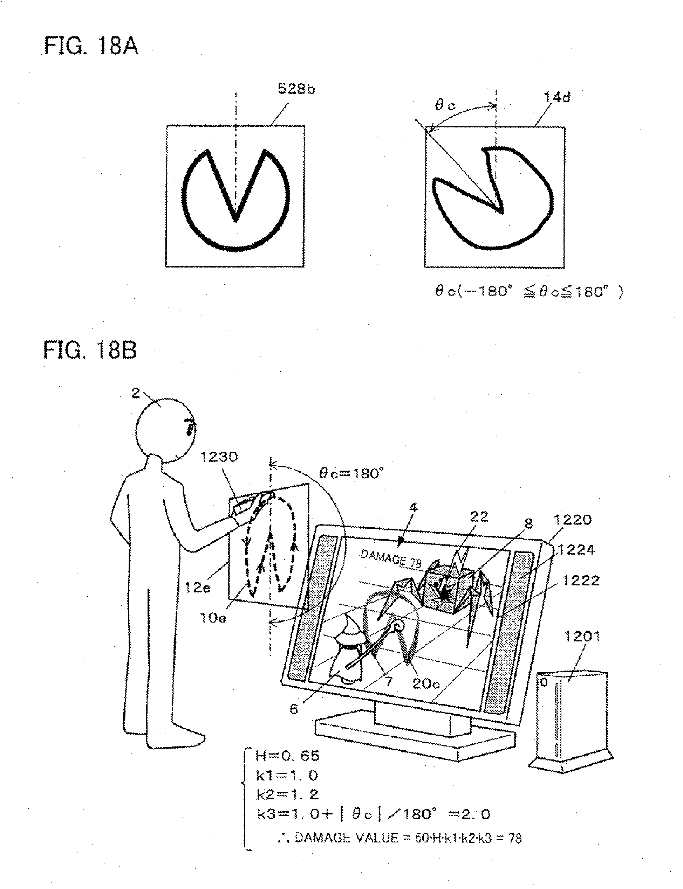

As shown in FIGS. 18A and 18B, an angle θc (-180°≤θc≤180°) formed by a reference image 528b and the path image 14 around the center of the images is calculated during pattern matching to calculate a third coefficient k3=1.0+|θc|/180°. The damage value 528c in the above embodiments may be further multiplied by the third coefficient k3. Specifically, the coefficient k3 is set at "1.0" when the direction of the figure pattern defined by the reference image 528b is the same as the direction of the entire moving path, and is set at a value closer to "2.0" as the direction of the figure pattern defined by the reference image 528b differs from the direction of the entire moving path to a larger extent. In the example shown in FIG. 18A, the reference image 528b is a figure pattern in which the upper portion of a circle is depressed in the shape of the letter V, and a state in which the depression in the shape of the letter V faces upward is a reference position. On the other hand, since the depression in the shape of the letter V of a path image 14d diagonally faces leftward at an ingle of 45°, the third coefficient k3 is set at about 1.25 larger than 1.0. In the example shown in FIG. 18B, since a moving path 10e is inverted with respect to the reference image 528b, the third coefficient k3 is set at 2.0. Therefore, even when drawing the same figure pattern, a higher damage value can be obtained by performing movement with a relatively high degree of difficulty (e.g., drawing a moving path in a different direction).

The above embodiments have been described taking an example in which the first coefficient k1 is calculated based on the angle formed by the normal direction 13 of the approximate plane 12 and the Xc axis of the game controller 1230 in order to determine the direction of the entire moving path. Note that a fourth coefficient k4 may be calculated based on the relative angle θf (0°≤θf≤180°) formed by the acceleration of gravity g calculated by the equation (9) in the above embodiments and the normal direction 13 of the approximate plane 12, and may be multiplied when calculating the damage value in the same manner as the third similar coefficient k3. Specifically, the fourth coefficient k4 is set at k4=1+|90°-θf|/90°.

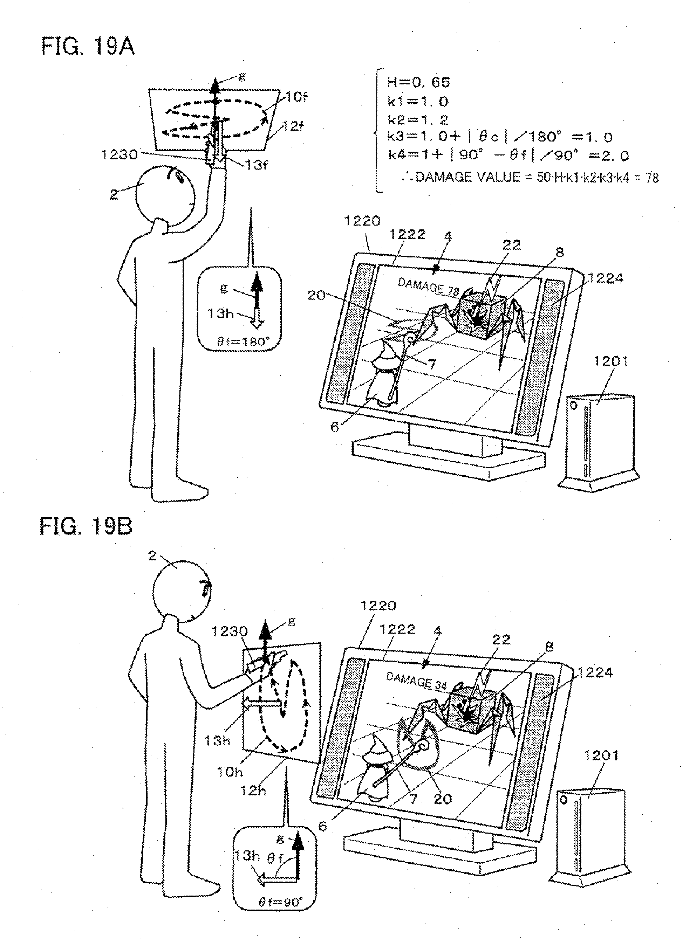

In the example shown in FIG. 19A, the player 2 move the game controller so that the game controller draws a moving path 10f overhead. In this case, since the acceleration of gravity g is almost opposite to a normal direction 13f of an approximate plane 12f, the fourth coefficient k4 is set at 2.0. When the game controller draws a moving path 10h in front of the player 2, as shown in FIG. 19B, since the angle formed by the acceleration of gravity g and a normal direction 13h of an approximate plane 12h is about 90°, the fourth coefficient k4 is set at 1.0. Therefore, even when drawing the same figure pattern, a higher damage value can be obtained by performing movement with a relatively high degree of difficulty (e.g., drawing the moving path 10 in a different direction (vertical/lateral direction with respect to the player)).

Or, different types of magic are effected depending on the relative angle θf formed by the acceleration of gravity g and the normal direction 13f of the approximate plane 12f.

For example, the condition relating to relative angle θf is associated with the reference image 526a of the reference pattern data 526 as a posture condition of the game controller 1230, and the operation input instruction 526b is defined depending on the condition. In the example of FIG. 8, lightning magic is set as the operation input instruction 526b when the condition relating to the relative angle θf is "about 90°", and another type of operation input (e.g., "call for thunder beast" or "healing magic") is set when the condition relating to the relative angle θf is "about 0° or about 180°", for example. In the step S80 shown in FIG. 13, the relative angle θf is calculated, and whether or not the operation input instruction 526b associated with the condition relating to the relative angle θf associated with the reference image with the highest degree of similarity of which the calculated relative angle θf coincides is determined.

According to this configuration, even if the number of figure patterns input by the player is small, since the player can perform various operation inputs by moving the game controller 1230 in various ways with respect to the body of the player, game playability can be increased.

The method of calculating the normal direction 13f is not limited to the method of providing a plane which passes three positions randomly selected from the positions $p_i$ employed in the above embodiments. For example, the normal direction 13f may be calculated by the following equation (24). a indicates a normal direction vector, and the magnitude of the normal direction vector corresponds to the area obtained by projecting the path drawn by the positions $p_i$ (i=0, ..., n+1) onto the approximate plane 12.

$$s = \frac{1}{2}\sum_{k=0}^{n}(p_k \times p_{k+1}) \qquad \cdots\cdots\cdots(24)$$

"×" indicates the outer product of the vector.

Although only some embodiments of the invention have been described above in detail, those skilled in the art would readily appreciate that many modifications are possible in the embodiments without materially departing from the novel teachings and advantages of the invention. Accordingly, such modifications are intended to be included within the scope of the invention.

**Claims**

1. A method that causes a computer to determine an operation input using a game controller including an acceleration detector, the method comprising:

   calculating a moving path of the game controller based on acceleration information detected by the acceleration detector when a player moves the game controller to change a position of the game controller in a real space; and determining the operation input based on the calculated moving path.

2. The method as defined in claim 1, the method further including controlling a game process based on the determined operation input.

3. The method as defined in claim 1, the method further including:

   determining an operation input instruction from a plurality of operation input instructions based on the calculated moving path; and
controlling a game process based on the determined operation input instruction.

4. The method as defined in claim 3, the determining of the operation input instruction including: selecting path reference data conforming to the calculated moving path from a plurality of pieces of path reference data respectively associated with the plurality of operation input instructions; and determining that the operation input instruction associated with the selected path reference data has been issued.

5. The method as defined in claim 4,

each of the plurality of operation input instructions being an instruction that directs a predetermined process based on a given variable parameter;
the determining the operation input instruction including calculating a degree of conformity between the calculated moving path and each of the plurality of pieces of path reference data, and selecting path reference data from the plurality of pieces of path reference data based on the calculation result; and
the controlling the game process including executing the process based on the determined operation input instruction while changing the variable parameter depending on the calculated degree of conformity of the selected path reference data.

6. The method as defined in any one of claims 1 to 5, the method further including executing a process based on a predetermined operation input instruction among the plurality of operation input instructions when the calculated moving path coincides with a predetermined path.

7. The method as defined in any one of claims 3 to 6,

each of the plurality of operation input instructions being an instruction that directs a predetermined process based on a given variable parameter;
the method further including calculating a size of the entire calculated moving path; and
the controlling the game process including executing the process based on the determined operation input instruction while changing the variable parameter depending on the calculated size of the entire moving path.

8. The method as defined in any one of claims 3 to 7,

each of the plurality of operation input instructions being an instruction that directs a predetermined process based on a given variable parameter;
the moving path being calculated by calculating a moving path in a three-dimensional coordinate system based on a direction of the game controller;
the method further including determining a direction of the entire moving path from the calculated moving path in the three-dimensional coordinate system; and
the controlling the game process including executing the process based on the determined operation input instruction while changing the variable parameter depending on the determined direction of the entire moving path.

9. The method as defined in any one of claims 3 to 5,

the moving path being calculated by calculating a moving path in a three-dimensional coordinate system based on a direction of the game controller;
the method further including determining a direction of the entire moving path from the calculated moving path in the three-dimensional coordinate system; and
the determining the operation input instruction including determining the operation input instruction based on the calculated moving path and the determined direction of the entire moving path.

10. The method as defined in any one of claims 3 to 5 and 9,

a position condition relating to the game controller being predetermined for each of the plurality of operation input instructions;
the method further including determining a position of the game controller based on the acceleration information used to calculate the moving path; and

the determining the operation input instruction including determining whether or not an operation input instruction among the plurality of operation input instructions has been issued, the operation input instruction being associated with path reference data conforming to the calculated moving path and satisfying the position condition with respect to the determined position of the game controller.

11. The method as defined in any one of claims 2 to 10, the controlling the game process including changing a position of a specific object in a game space based on the calculated moving path.

12. The method as defined in any one of claims 1 to 11, the method further including displaying an image of the calculated moving path.

13. The method as defined in any one of claims 1 to 12, the method further including:

detecting whether or not an operation input that indicates start of the movement of the game controller has been performed; and
detecting whether or not an operation input that indicates finish of the movement of the game controller has been performed,
the calculating the moving path including calculating the moving path during a period from detection of the operation input that indicates start of the movement of the game controller to detection of the operation input that indicates finish of the movement of the game controller.

14. The method as defined in claim 13, the calculating the moving path including calculating the moving path subject to the condition that a position of the game controller when the operation input that indicates start of the movement of the game controller has been detected and a position of the game controller when the operation input that indicates finish of the movement of the game controller has been detected satisfy a specific position condition.

15. The method as defined in claim 14, the calculating the moving path including calculating the moving path subject to the condition that a position of the game controller when the operation input that indicates start of the movement of the game controller has been detected is the same as a position of the game controller when the operation input that indicates finish of the movement of the game controller has been detected.

16. The method as defined in any one of claims 13 to 15, the calculating the moving path including calculating the moving path subject to the condition that 1) a velocity of the game controller when the operation input that indicates start of the movement of the game controller has been detected is zero and/or 2) a velocity of the game controller when the operation input that indicates finish of the movement of the game controller has been detected is zero.

17. A program causing the computer to execute the method as defined in any one of claims 1 to 16.

18. A computer-readable information storage medium storing the program as defined in claim 17.

19. A game device comprising:

a game controller including an acceleration detector;
a moving path calculation section that calculates a moving path of the game controller based on acceleration information detected by the acceleration detector when a player moves the game controller to change a position of the game controller in a real space; and
a determination section that determines an operation input based on the calculated moving path.

## FIG. 1

## FIG. 2

## FIG. 3A          FIG. 3B          FIG. 3C

## FIG. 4

## FIG. 5

CONDITION (a): $p_0 = p_{n+1}$
CONDITION (b): $v_n = 0$

$(\triangle t = const.)$

FIG. 6

# FIG. 7

200 — PROCESSING SECTION

210 — GAME CALCULATION SECTION

212 — MOVING PATH CALCULATION SECTION

214 — OPERATION INPUT INSTRUCTION DETERMINATION SECTION

100 — OPERATION INPUT SECTION

102 — ACCELERATION DETECTION SECTION

104 — COMMUNICATION SECTION

250 — SOUND GENERATION SECTION

SOUND OUTPUT SECTION — 350

260 — IMAGE GENERATION SECTION

IMAGE DISPLAY SECTION — 360

270 — COMMUNICATION CONTROL SECTION

COMMUNICATION SECTION

370

500 — STORAGE SECTION

501 — SYSTEM PROGRAM

502 — GAME PROGRAM

504 — MOVING PATH CALCULATION PROGRAM

506 — OPERATION INPUT INSTRUCTION DETERMINATION PROGRAM

520 — GAME SPACE SETTING DATA

522 — CHARACTER SETTING DATA

524 — MAGIC EFFECT SETTING DATA

REFERENCE PATTERN DATA — 526

DAMAGE TABLE DATA — 528

CHARACTER CONTROL DATA — 530

SAMPLING DATA — 532

INPUT FLAG — 534

# FIG. 8

526 — REFERENCE PATTERN DATA                526b

526a —

| REFERENCE IMAGE | OPERATION INPUT INSTRUCTION |
|---|---|
|  | LIGHTNING MAGIC |

. . . .

# FIG. 9

528 — DAMAGE TABLE DATA

528a —

| OPERATION INPUT INSTRUCTION TYPE | LIGHTNING MAGIC |
|---|---|

528c

528b —

| MATCHING EVALUATION VALUE RANGE | DAMAGE VALUE |
|---|---|
| $0.3 \leqq H < 0.4$ | $20 \times H \times k1 \times k2$ |
| $0.4 \leqq H < 0.9$ | $50 \times H \times k1 \times k2$ |
| $0.9 \leqq H \leqq 1.0$ | $100 \times H \times k1 \times k2$ |

. . . .

$$※ k1 = \begin{cases} 1.0\,(-45° \leqq \theta a \leqq 45° \text{、} -180° \leqq \theta a \leqq -135° \text{、} \\ \qquad 135° \leqq \theta a \leqq 180°\,) \\ 2.0\,(-135° < \theta a < -45° \text{、} 45° < \theta a < 135°\,) \end{cases}$$

※ k2 = MOVING PATH AREA / REFERENCE AREA $A_0$

27

# FIG. 10

532 SAMPLING DATA

532a ACCELERATION

532b POSITION

| $a_0$ | $p_0$ |
|-------|-------|
| $a_1$ | $p_1$ |
| $a_2$ | $p_2$ |
| $\vdots$ | $\vdots$ |
| $a_{n-1}$ | $p_{n+1}$ |

532c MOVING PATH FUNCTION

532d APPROXIMATE PLANE FUNCTION

532e PATH IMAGE

14

# FIG. 11

```
                    ┌─────────────┐
                    │    START    │
                    └─────────────┘
                           │
                           ▼
        ┌──────────────────────────────┐
        │   FORMS GAME SPACE IN        │─── S2
        │   THREE-DIMENSIONAL          │
        │   VIRTUAL SPACE              │
        └──────────────────────────────┘
                           │
                           ▼
        ┌──────────────────────────────┐
        │  DISPOSES PLAYER CHARACTER,  │
        │    ENEMY CHARACTER, AND      │─── S4
        │ VIRTUAL CAMERA IN GAME SPACE │
        │  ACCORDING TO INITIAL SETTING│
        └──────────────────────────────┘
                           │
                           ▼
        ┌──────────────────────────────┐
        │       CALCULATES             │─── S6
        │      MOVING PATH             │
        └──────────────────────────────┘
                           │
                           ▼
        ┌──────────────────────────────┐
        │ OPERATION INPUT INSTRUCTION  │─── S8
        │    DETERMINATION PROCESS     │
        └──────────────────────────────┘
                           │
                           ▼
        ┌──────────────────────────────┐
        │   CAUSES PLAYER CHARACTER    │
        │     TO WAVE MAGIC WAND       │─── S10
        │    TO DRAW MOVING PATH       │
        └──────────────────────────────┘
                           │
                           ▼
        ┌──────────────────────────────┐
        │     DISPOSES OBJECT FOR      │─── S12
        │    DISPLAYING MOVING PATH    │
        └──────────────────────────────┘
                           │
                           ▼
        ┌──────────────────────────────┐
        │   CAUSES PLAYER CHARACTER    │
        │      TO PRACTICE MAGIC       │─── S14
        │   ACCORDING TO DETERMINED    │
        │ OPERATION INPUT INSTRUCTION  │
        └──────────────────────────────┘
                           │
                           ▼
        ┌──────────────────────────────┐
        │   CALCULATES DAMAGE VALUE    │─── S16
        │ APPLIED TO ENEMY CHARACTER   │
        │ BASED ON MATCHING EVALUATION │
        │           VALUE              │
        └──────────────────────────────┘
                           │
                           ▼
        ┌──────────────────────────────┐
        │      ENEMY CHARACTER         │─── S18
        │     DAMAGING PROCESS         │
        └──────────────────────────────┘
                           │
                           ▼
        ┌──────────────────────────────┐
        │   AUTOMATICALLY CONTROLS     │─── S20
        │      ENEMY CHARACTER         │
        └──────────────────────────────┘
                           │
                           ▼
        ┌──────────────────────────────┐
        │ DAMAGING PROCESS FOR PLAYER  │
        │ CHARACTER BASED ON OPERATION │─── S22
        │     OF ENEMY CHARACTER       │
        └──────────────────────────────┘
                           │
                           ▼
  NO          ╱ HAS GAME FINISH ╲        S24
  ◄───────────  CONDITION BEEN
              ╲   SATISFIED?   ╱
                      │ YES
                      ▼
        ┌──────────────────────────────┐
        │    GAME FINISH PROCESS       │─── S26
        └──────────────────────────────┘
                      │
                      ▼
              ┌─────────────┐
              │     END     │
              └─────────────┘
```

# FIG. 12

```
            ┌─────────────────────────┐
            │     MOVING PATH         │
            │  CALCULATION PROCESS    │
            └─────────────────────────┘
                        │
                        ▼
S50 ──────    ┌──────────────────┐
            │   IS SPECIFIC      │  NO
            │  BUTTON SWITCH     ├──────────────┐
            │    PRESSED?        │              │
            └──────────────────┘              │
                    │ YES                      ▼
S52 ──────    ┌──────────────┐「1」    S60 ──  ┌──────────────────┐
            │  INPUT FLAG?  ├──────┐        │ INPUT FLAG = "0" │
            └──────────────┘      │        └──────────────────┘
                    │「0」         │                │
                    ▼             │                │
S54 ──────    ┌──────────────┐    │                │
            │ INPUT FLAG = "1" │  │                │
            └──────────────┘    │                │
                    │           │                │
                    ▼           │                │
S56 ──────    ┌──────────────┐    │                │
            │ RESETS SAMPLING DATA │                │
            └──────────────┘    │                │
                    │◄──────────┘                │
                    ▼                            │
S58 ──────    ┌─────────────────────────┐        │
            │  ACQUIRES AND STORES      │        │
            │  ACCELERATIONS OF GAME    │        │
            │  CONTROLLER AT SPECIFIC   │        │
            │  SAMPLING FREQUENCY       │        │
            └─────────────────────────┘        │
                    │◄──────────────────────────┘
                    ▼
S62 ──────    ┌─────────────────────────┐
            │  IS INPUT FLAG SET AT "0"  │  NO
            │  AND HAS POSITION NOT      ├──────┐
            │  BEEN CALCULATED?          │      │
            └─────────────────────────┘      │
                    │ YES                      │
                    ▼                          │
S64 ──────    ┌─────────────────────────┐      │
            │   CALCULATES ALL           │      │
            │   POSITIONS pi             │      │
            └─────────────────────────┘      │
                    │                          │
                    ▼                          │
S66 ──────    ┌─────────────────────────┐      │
            │  CALCULATES MOVING PATH    │      │
            │  FUNCTION WHICH PASSES     │      │
            │  ALL POSITIONS pi          │      │
            └─────────────────────────┘      │
                    │◄──────────────────────────┘
                    ▼
            ┌─────────────┐
            │     END     │
            └─────────────┘
```

30

# FIG. 13

OPERATION INPUT
INSTRUCTION DETERMINATION
PROCESS

S70 — CALCULATES
APPROXIMATE PLANE

S72 — GENERATES PATH IMAGE

S74 — PERFORMS PATTERN MATCHING
PROCESS FOR PATH IMAGE, AND
SELECTS REFERENCE IMAGE WITH
HIGHEST DEGREE OF SIMILARITY

S76 — IS MATCHING EVALUATION VALUE OF
REFERENCE IMAGE WITH HIGHEST DEGREE
OF SIMILARITY EQUAL TO OR LARGER THAN
REFERENCE VALUE (0.3)?

NO

YES

S78 — OPERATION INPUT
INSTRUCTION HAS NOT
BEEN SELECTED

S80 — DETERMINES THAT OPERATION
INPUT INSTRUCTION ASSOCIATED
WITH REFERENCE IMAGE WITH
HIGHEST DEGREE OF SIMILARITY
HAS BEEN INPUT

END

31

## FIG. 14A

## FIG. 14B

FIG. 15A

FIG. 15B

FIG. 16

FIG. 17A     FIG. 17B     FIG. 17C

FIG. 18A

528b

14d

$\theta c$

$\theta c (-180° \leqq \theta c \leqq 180°)$

FIG. 18B

2

1230

$\theta c = 180°$

12e

10e

4

22

8

1220

1224

DAMAGE 78

1222

1201

6

7

20c

H = 0.65
k1 = 1.0
k2 = 1.2
k3 = 1.0 + $|\theta c|$ / 180° = 2.0
∴ DAMAGE VALUE = 50·H·k1·k2·k3 = 78

FIG. 19A

$$H = 0.65$$
$$k1 = 1.0$$
$$k2 = 1.2$$
$$k3 = 1.0 + |\theta c| / 180° = 1.0$$
$$k4 = 1 + |90° - \theta f| / 90° = 2.0$$
$$\therefore \text{DAMAGE VALUE} = 50 \cdot H \cdot k1 \cdot k2 \cdot k3 \cdot k4 = 78$$

$\theta f = 180°$

FIG. 19B

$\theta f = 90°$

36

**European Patent Office**

**EUROPEAN SEARCH REPORT**

Application Number

EP 07 12 1924

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/040731 A (WIRELESS REPUBLIC GROUP [KR]; KANG JAE-SUNG [KR]) 15 May 2003 (2003-05-15) * page 24, line 2 - line 12 * * page 28, line 19 - line 25 * ----- | 1-19 | INV. A63F13/02 |
| A | US 2003/073492 A1 (TOSAKI KENJI [JP] ET AL) 17 April 2003 (2003-04-17) * paragraphs [0156], [0159] * ----- | 1-19 | |
| A | US 2006/258454 A1 (BRICK TODD A [US]) 16 November 2006 (2006-11-16) * abstract * ----- | 1-19 | |
| A | US 2001/024973 A1 (MEREDITH CHRISTOPHER [US]) 27 September 2001 (2001-09-27) * abstract * ----- | 1-19 | |
| | | | **TECHNICAL FIELDS SEARCHED (IPC)** A63F |

The present search report has been drawn up for all claims

| Place of search | Date of completion of the search | Examiner |
|---|---|---|
| Munich | 3 March 2008 | Arnold, Stuart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 12 1924

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2008

| Patent document cited in search report | | Publication date | Patent family member(s) | Publication date |
|---|---|---|---|---|
| WO 03040731 | A | 15-05-2003 | KR 20020091002 A | 05-12-2002 |
| US 2003073492 | A1 | 17-04-2003 | NONE | |
| US 2006258454 | A1 | 16-11-2006 | NONE | |
| US 2001024973 | A1 | 27-09-2001 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004094653 A